# FASCICULE DE BREVET EUROPEEN

(11) **EP 4 154 343 B1**
(45) Date de publication et mention de la délivrance du brevet: **23.10.2024**
(21) Numéro de dépôt: 21727584.1
(22) Date de dépôt: 19.05.2021
(51) Int. Cl.: H01M 10/04, H01M 10/0585, H01M 50/124, H01M 50/131

(54) **PROCEDE DE FABRICATION D'UNE BATTERIE A IONS DE LITHIUM**
VERFAHREN ZUR HERSTELLUNG EINER LITHIUM-IONEN-BATTERIE
METHOD FOR MANUFACTURING A LITHIUM-ION BATTERY

(30) Priorité: 20.05.2020 FR 2005140
(43) Date de publication de la demande: 29.03.2023
(73) Titulaire: I-TEN, 69570 Dardilly (FR)
(72) Inventeur: GABEN, Fabien, 69570 Dardilly (FR)
(74) Mandataire: Regimbeau
(86) Numéro de dépôt international: PCT/IB2021/054292
(87) Numéro de publication internationale: WO 2021/234585

(56) Documents cités:
- WO-A1-2019/181909
- WO-A1-2019/215410
- WO-A2-2009/048300

## Description

### Domaine technique de l'invention

La présente invention se rapporte au domaine des batteries, et plus particulièrement aux batteries à ions de lithium. L'invention concerne un nouveau procédé de fabrication de batteries, et notamment de batteries à ions de lithium qui présentent une architecture nouvelle qui leur confère une durée de vie améliorée.

### Etat de la technique

Des batteries rechargeables entièrement solides à ions de lithium sont connues. WO 2016/001584 (I-TEN) décrit une batterie à ions de lithium fabriquée à partir de feuilles anodiques comprenant un substrat conducteur recouvert successivement d'une couche d'anode et d'une couche d'électrolyte, et de feuilles cathodiques comprenant un substrat conducteur recouvert successivement d'une couche de cathode et d'une couche d'électrolyte ; ces feuilles sont découpées, avant ou après dépôt, selon des motifs en forme de U. Ces feuilles sont ensuite empilées de manière alternée afin de constituer un empilement de plusieurs cellules élémentaires. Les motifs de découpe des feuilles anodiques et cathodiques sont placés en configuration « tête bêche » de manière à ce que l'empilement des cathodes et des anodes soit décalé latéralement. Ensuite on dépose un système d'encapsulation d'une épaisseur de l'ordre d'une dizaine de microns sur l'empilement et dans les cavités disponibles présentes au sein de l'empilement. Ce système d'encapsulation assure la rigidité de la structure au niveau des plans de coupe et protège la cellule de la batterie de l'atmosphère. Une fois l'empilement réalisé et encapsulé, on le découpe suivant des plans de coupe pour obtenir des batteries unitaires, avec la mise à nu sur chacun des plans de coupe des zones de connexion cathodique et des zones de connexion anodique des batteries. Il se trouve que lors de ces découpes, le système d'encapsulation peut être arraché, ce qui entraîne une discontinuité de l'étanchéité de la batterie. Il est aussi connu d'ajouter des terminaisons (i.e. des contacts électriques) à l'endroit où ces zones de connexion cathodique et anodique sont apparentes.

Il est apparu que cette solution connue peut présenter cependant certains inconvénients. En effet, en fonction du positionnement des électrodes, notamment de la proximité des bords des électrodes pour les batteries multicouches et de la propreté des découpes, un courant de fuite peut apparaître sur les extrémités, typiquement sous la forme d'un court-circuit rampant. Ce court-circuit rampant diminue la performance de la batterie, et ce, malgré l'utilisation d'un système d'encapsulation autour de la batterie et aux abords des zones de connexion cathodique et anodique. Par ailleurs, on constate parfois un dépôt insatisfaisant du système d'encapsulation sur la batterie, notamment sur les bords de la batterie au niveau des espaces créés par les décalages latéraux des électrodes sur les bords de batterie. Au autre document de l'art antérieur significatif est WO 2019/215410 A1.

La présente invention vise à remédier au moins en partie à certains inconvénients de l'art antérieur évoqués ci-dessus, notamment à obtenir des batteries rechargeables à ions de lithium à forte densité d'énergie et forte densité de puissance.

Elle vise en particulier à accroître le rendement de production des batteries rechargeables à ions de lithium à forte densité d'énergie et forte densité de puissance, et à réaliser des encapsulations plus performantes à moindre coût.

Elle vise en particulier à proposer un procédé qui diminue le risque de court-circuit rampant ou accidentel et qui permet de fabriquer une batterie présentant une faible autodécharge. Elle vise en particulier à proposer un procédé, qui permet de fabriquer de manière simple, fiable et rapide une batterie présentant une durée de vie très élevée.

Elle vise également à proposer un procédé de fabrication de batteries simple, rapide et économique.

### Objets de l'invention

Un premier objet de l'invention est une batterie de fabrication d'au moins une batterie (1000), chaque batterie comprenant au moins une entité anodique (110) et au moins une entité cathodique (140), disposées l'une au-dessus de l'autre de manière alternée selon une direction frontale (ZZ) de la batterie (1000),
dans laquelle batterie, ladite entité anodique (110) comprend :
un substrat collecteur de courant anodique (10), au moins une couche d'anode (20), et
éventuellement une couche d'un matériau d'électrolyte (30) ou d'un séparateur (31) imprégné d'un électrolyte,
et dans laquelle batterie ladite entité cathodique (140) comprend
un substrat collecteur de courant cathodique (40), au moins une couche de cathode (50), et éventuellement une couche d'un matériau d'électrolyte (30) ou d'un séparateur (31) imprégné d'un électrolyte,
ladite batterie (1000) présentant six faces, à savoir
   - deux faces dites frontales (F1, F2) mutuellement opposées, en particulier mutuellement parallèles, globalement parallèles à chaque entité anodique (110) et, à chaque entité cathodique (140),
   - deux faces dites latérales (F3, F5) mutuellement opposées, en particulier mutuellement parallèles ; et
   - deux faces dites longitudinales (F4, F6), mutuellement opposées, en particulier mutuellement parallèles,
étant entendu que la première face longitudinale (F6) de la batterie comprend au moins une zone de connexion anodique (1002) et qu'une seconde face longitudinale (F4) de la batterie comprend au moins une zone de connexion cathodique (1006), lesdites zones de connexion anodique (1002) et cathodique (1006) étant latéralement opposées,
   - chaque entité anodique (110) et chaque entité cathodique (140) comprenant un corps primaire (111, 141) respectif, séparé d'un corps secondaire (112, 142) respectif, par un espace libre (113, 143) de tout matériau d'électrode, et de substrat collecteur de courant ;
   - lorsque la batterie comprend plusieurs espaces libres (113), selon ladite direction frontale (ZZ) de la batterie ;
   - les espaces libres ménagés entre chaque corps primaire (111) et chaque corps secondaire (112) de chaque entité anodique (110) sont superposés ;

   > les espaces libres ménagés entre chaque corps primaire (141) et chaque corps secondaire (142) de chaque entité cathodique (140) sont superposés ; et
   > les espaces libres de chaque entité anodique (110) et de chaque entité cathodique (140) ne sont pas confondus ;
ledit procédé de fabrication comprenant :
   a) la réalisation d'un empilement (I) comprenant, en vue de dessus, x rangées avec x strictement supérieur à 1 ainsi que y ligne(s) avec y supérieur ou égal à 1, de manière à former un nombre (x*y) de batteries
      cet empilement étant formé par une succession alternée de strates (SA, SC) respectivement cathodique (SC) et anodique (SA), chaque strate cathodique (SC) étant destinée à former un nombre (x*y) d'entités cathodiques (140) alors que chaque strate anodique (SA) est destinée à former un nombre (x*y) d'entités anodiques (110),
      chaque strate (SA, SC) comprenant une pluralité d'ébauches primaires (111', 141'), respectivement anodique (111') et cathodique (141') , dont chacune est destinée à former un corps primaire (111, 141) respectif, une pluralité d'ébauches secondaires (112', 142'), respectivement anodique (112') et cathodique (142'), dont chacune est destinée à former un corps secondaire (112, 142) respectif, l'ébauche primaire (111', 141') et l'ébauche secondaire (112', 142') étant mutuellement séparées par une zone dite vide (80", 70"), laquelle est destinée à former au moins un desdits espaces libres (113, 143),et lorsque la batterie comprend plusieurs espaces libres (113), selon la direction frontale (ZZ) de la batterie ;
         - les zones vides (80") des différentes strates anodiques (SA) sont superposées ;
         - les zones vides (70") des différentes strates cathodiques (SC) sont superposées ; et
         - les zones vides (80", 70") de chaque strate anodique (SA) et de chaque strate cathodique (SC) ne sont pas confondues,
      b) la réalisation d'un traitement thermique et/ou d'une compression mécanique de l'empilement (I) obtenu à l'étape a) de manière à former un empilement consolidé ;
      c) la réalisation d'une paire de découpes principales (DYn, DY'n) entre deux zones vides adjacentes (80", 70"), en vue de dessus, de manière à mettre à nu la zone de connexion anodique (1002) et la zone de connexion cathodique (1006), et à séparer une batterie donnée, formée à partir d'une rangée donnée (Rₙ), vis-à-vis d'au moins une autre batterie adjacente, formée à partir d'au moins une rangée adjacente (Rₙ₊₁).

Selon un premier mode de réalisation, chaque strate (SA, SC) est formée par une feuille d'un seul tenant, les zones vides correspondant en particulier à des chutes de matière dans la feuille (70, 80, 70', 80').

Selon un autre mode de réalisation, chaque strate (SA, SC) est formée par une pluralité de bandes indépendantes (A₁, A₂, Aₙ, C₁, C₂, Cₙ), les zones vides (113', 143') étant définies entre les bords (LA, LC) en regard des bandes adjacentes.

Selon une première variante de l'invention, on réalise des zones vides dites de faible dimension (80,70) appelées fentes, chaque zone vide, dite de faible dimension, est destinée à former un unique espace libre.

Selon une seconde variante de l'invention, on réalise des zones vides dites de grande dimension (80',70') appelées entailles, chaque zone vide de grande dimension étant destinées à former une pluralité d'espaces libres dans une même rangée, en particulier l'ensemble des espaces libres de ladite même rangée (Rₙ).

Selon une caractéristique avantageuse de l'invention, les zones vides (70, 70', 80', 80') présentent une forme rectangulaire, notamment une forme de I.

Selon une caractéristique de l'invention on réalise après l'étape b), lors d'une étape d), une paire de découpes accessoires (DXn, DX'n) permettant de séparer une ligne (Lₙ) donnée vis-à-vis d'au moins une ligne adjacente (Lₙ₋₁, Lₙ₊₁) appartenant audit empilement consolidé.

Selon une autre caractéristique de l'invention on réalise, lors d'une étape e), l'imprégnation de l'empilement consolidé obtenu à l'étape b) ou l'imprégnation de la ligne (Lₙ) de batteries (1000) obtenue à l'étape d) lorsque l'étape d) est réalisée, par une phase porteuse d'ions de lithium telle que des électrolytes liquides ou un liquide ionique contenant des sels de lithium, de sorte que ladite couche de séparateur (31) soit imprégnée par un électrolyte ;

Selon une caractéristique de l'invention on réalise, avant l'étape c) et après l'étape e) si cette dernière est réalisée ou bien, si l'étape e) n'est pas réalisée, après l'étape d) si l'étape d) est réalisée ou bien, si les étapes e) et d) ne sont pas réalisées, après l'étape b), une étape f) d'encapsulation de l'empilement consolidé ou de la ligne (Lₙ) de batteries (1000), de préférence, dans laquelle on recouvre, par un système d'encapsulation (95), la périphérie extérieure de l'empilement (I) ou de la ligne (Lₙ) de batteries (1000), de préférence, les faces frontales de l'empilement (F1, F2) ou de la ligne (Lₙ) de batteries (FF1, FF2), les faces latérales (F3, F5, FF3, FF5) et les faces longitudinales (F4, F6, FF4, FF6) de l'empilement (I) ou de la ligne (Lₙ) de batteries (1000),
ledit système d'encapsulation (95) comprenant, de préférence,
   - optionnellement, au moins une première couche de recouvrement, de préférence choisie parmi le parylène, le parylène de type F, le polyimide, les résines époxy, le silicone, le polyamide, la silice sol-gel, la silice organique et/ou un mélange de ceux-ci, déposée sur la périphérie extérieure de l'empilement (I) ou de la ligne (Lₙ) de batteries (1000),
   - optionnellement une deuxième couche de recouvrement composée d'une matière électriquement isolante déposée par dépôt de couches atomiques, sur la périphérie extérieure de l'empilement (I) ou sur la périphérie extérieure de la ligne (Lₙ) de batteries (1000) ou sur la première couche de recouvrement, et
   - au moins une troisième couche de recouvrement étanche, de préférence ayant une perméance à la vapeur d'eau (WVTR) inférieure à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée sur la périphérie extérieure de l'empilement (I) ou sur la périphérie extérieure de la ligne (Lₙ) de batteries (1000), ou de la première couche de recouvrement,
étant entendu qu'une séquence d'au moins une deuxième couche de recouvrement et d'au moins une troisième couche de recouvrement peut être répétée z fois avec z ≥ 1 et déposée à la périphérie externe d'au moins la troisième couche de recouvrement, et que la dernière couche du système d'encapsulation est une couche de recouvrement étanche, de préférence ayant une perméance à la vapeur d'eau (WVTR) inférieure à 10⁻⁵ g/m².d et étant composée d'un matériau céramique et/ou d'un verre à bas point de fusion.

Selon une autre caractéristique de l'invention, après l'étape c), on réalise une étape g) dans laquelle on recouvre au moins la zone de connexion anodique (1002), de préférence au moins la première face longitudinale (F6) comprenant au moins la zone de connexion anodique (1002), par un organe de contact anodique (97'), apte à assurer le contact électrique entre l'empilement (I) et un élément conducteur externe,
et en ce qu'on recouvre au moins la zone de connexion cathodique (1006), de préférence au moins la seconde face longitudinale (F4) comprenant au moins la zone de connexion cathodique (1006), par un organe de contact cathodique (97"), apte à assurer le contact électrique entre l'empilement (I) et un élément conducteur externe,
l'étape (i) comprenant :
   - le dépôt sur au moins la zone de connexion anodique (1002) et sur au moins la zone de connexion cathodique (1006), de préférence, sur au moins la première face longitudinale (F6) comprenant au moins la zone de connexion anodique (1002), et sur au moins la seconde face longitudinale (F4) comprenant au moins la zone de connexion cathodique (1006), d'une première couche de connexion électrique de matériau chargé en particules électriquement conductrices, ladite première couche étant de préférence formée de résine polymérique et/ou d'un matériau obtenu par un procédé sol-gel chargé en particules électriquement conductrices ;
   - optionnellement, lorsque ladite première couche est formée de résine polymérique et/ou d'un matériau obtenu par un procédé sol-gel chargé en particules électriquement conductrices, une étape de séchage suivie d'une étape de polymérisation de ladite résine polymérique et/ou dudit matériau obtenu par un procédé sol-gel ; et
   - le dépôt, sur la première couche, d'une deuxième couche de connexion électrique comprenant une feuille métallique disposée sur la première couche de connexion électrique.
   - optionnellement, le dépôt sur la deuxième couche de connexion électrique, d'une troisième couche de connexion électrique comprenant une encre conductrice.

Selon encore une caractéristique préférée de l'invention, les découpes réalisées à l'étape d) lorsque cette étape est réalisée, et/ou à l'étape c), sont effectuées par ablation laser, de préférence en ce que toutes les découpes réalisées à l'étape d) lorsque cette étape est réalisée, et/ou à l'étape c) sont effectuées par laser.

L'invention a également pour objet une batterie (1000) comprenant au moins une entité anodique (110) et au moins une entité cathodique (140), disposée l'une au-dessus de l'autre de manière alternée selon une direction frontale (ZZ) au plan principal de la batterie (1000), formant un empilement (I),
dans laquelle ladite entité anodique (110) comprend : un substrat collecteur de courant anodique (10), au moins une couche d'anode (20), et éventuellement une couche d'un matériau d'électrolyte (30) ou d'un séparateur (31) imprégné d'un électrolyte,
et dans laquelle ladite entité cathodique (140) comprend : un substrat collecteur de courant cathodique (40), au moins une couche de cathode (50), et éventuellement une couche d'un matériau d'électrolyte (30) ou d'un séparateur (31) imprégné d'un électrolyte ;
ladite batterie (1000) présentant six faces, à savoir
   - deux faces dites frontales (F1, F2) mutuellement opposées, en particulier mutuellement parallèles, globalement parallèles à chaque entité anodique (110), à chaque entité cathodique (140), au(x) substrat(s) collecteur de courant anodique (10), au(x) couche(s) d'anode (20), au(x) couche(s) d'un matériau d'électrolyte (30) ou au(x) couche(s) de séparateur imprégné d'un électrolyte (31), au(x) couche(s) de cathode (50), et au(x) substrat(s) collecteur de courant cathodique (40),
   - deux faces dites latérales (F3, F5) mutuellement opposées, en particulier mutuellement parallèles,
   - et deux faces dites longitudinales (F4, F6), mutuellement opposées, en particulier mutuellement parallèles,
étant entendu que la première face longitudinale (F6) de la batterie comprend au moins une zone de connexion anodique (1002) et qu'une seconde face longitudinale (F4) de la batterie comprend au moins une zone de connexion cathodique (1006), lesdites zones de connexion anodique (1002) et cathodique (1006) étant latéralement opposées,
de sorte que :
   - chaque entité anodique (110) et chaque entité cathodique (140) comprend un corps primaire (111, 141) respectif, séparé d'un corps secondaire (112, 142) respectif, par un espace libre (113, 143) de tout matériau d'électrode, et de substrat collecteur de courant,
   - lorsque la batterie comprend plusieurs espaces libres (113), selon une direction frontale (ZZ) au plan principal de la batterie,
      > les espaces libres ménagés entre chaque corps primaire (111) et chaque corps secondaire (112) de chaque entité anodique (110) sont superposés,
      > les espaces libres ménagés entre chaque corps primaire (141) et chaque corps secondaire (142) de chaque entité cathodique (140) sont superposés, et
      > les espaces libres de chaque entité anodique (110) et de chaque entité cathodique (140) ne sont pas confondus.
caractérisée en ce que la batterie comprend un système d'encapsulation recouvrant au moins en partie la périphérie extérieure de l'empilement (I), ledit système d'encapsulation (95) recouvrant les faces frontales de l'empilement (F1, F2), les faces latérales (F3, F5) et au moins en partie les faces longitudinales (F4, F6) de sorte que seules les zones de connexion anodique (1002) et cathodique (1006),
de préférence, la première face longitudinale (F6) comprenant au moins la zone de connexion anodique (1002), et la seconde face longitudinale (F4) comprenant au moins la zone de connexion cathodique (1006),
ne sont pas recouvertes dudit système d'encapsulation (95), ledit système d'encapsulation (95) comprenant :
   - optionnellement, une première couche de recouvrement, de préférence choisie parmi le parylène, le parylène de type F, le polyimide, les résines époxy, le silicone, le polyamide, la silice sol-gel, la silice organique et/ou un mélange de ceux-ci, déposée sur au moins en partie la périphérie extérieure de l'empilement (I),
   - optionnellement une deuxième couche de recouvrement composée d'une matière électriquement isolante déposée par dépôt de couches atomiques, sur au moins en partie la périphérie extérieure de l'empilement (I), ou sur la première couche de recouvrement,
   - au moins une troisième couche de recouvrement étanche, de préférence ayant une perméance à la vapeur d'eau (WVTR) inférieure à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée sur au moins en partie la périphérie extérieure de l'empilement (I), ou sur la première couche de recouvrement,
étant entendu que lorsque ladite deuxième couche de recouvrement est présente,
une succession de ladite deuxième couche de recouvrement et de ladite troisième couche de recouvrement peut être répétée z fois avec z ≥ 1 et déposée à la périphérie externe d'au moins la troisième couche de recouvrement,
la dernière couche du système d'encapsulation étant une couche de recouvrement étanche, de préférence ayant une perméance à la vapeur d'eau (WVTR) inférieure à 10⁻⁵ g/m².d et étant composée d'un matériau céramique et/ou d'un verre à bas point de fusion.

Selon une caractéristique avantageuse de la batterie conforme à l'invention, la zone de connexion anodique (1002), de préférence la première face longitudinale (F6) comprenant au moins la zone de connexion anodique (1002), est recouverte par un organe de contact anodique (97'),
et en ce qu'au moins la zone de connexion cathodique (1006), de préférence la seconde face longitudinale (F4) comprenant au moins la zone de connexion cathodique (1006), est recouverte par un organe de contact cathodique (97"),
étant entendu que lesdits organes de contact anodique (97') et cathodique (97") sont apte à assurer le contact électrique entre l'empilement (I) et un élément conducteur externe.

Selon une autre caractéristique de la batterie conforme à l'invention, chacun des organes de contact anodique (97') et cathodique (97") comprend :
- une première couche de connexion électrique, disposée sur au moins la zone de connexion anodique (1002) et au moins la zone de connexion cathodique (1006), de préférence sur la première face longitudinale (F6) comprenant au moins la zone de connexion cathodique (1002) et sur la seconde face longitudinale (F4) comprenant au moins la zone de connexion cathodique (1006),
   cette première couche comprenant un matériau chargé en particules électriquement conductrices, de préférence une résine polymérique et/ou un matériau obtenu par un procédé sol-gel, chargé en particules électriquement conductrices et encore plus préférentiellement une résine polymérique chargée en graphite, et
- une deuxième couche de connexion électrique comprenant une feuille métallique disposée sur la première couche de matériau chargé en particules électriquement conductrices.

Selon un premier mode de réalisation, la batterie conforme à l'invention a une capacité inférieure ou égale à 1 mA h.

Selon un mode de réalisation alternatif, la batterie conforme à l'invention a une capacité supérieure à 1 mA h.

### Figures

Les figures annexées, données à titre d'exemples non limitatifs, représentent différents aspects et modes de réalisation de l'invention.
[Fig. 1] est une vue en perspective de feuilles anodique et cathodique destinées à former un empilement selon le procédé de fabrication de batteries conforme à l'invention, ces feuilles anodique et cathodique présentant des zones vides, dites de faible dimension, i.e des fentes.
[Fig. 2] est une vue de dessus, illustrant l'une des feuilles, notamment une feuille anodique, de la figure 1.
[Fig. 3] est une vue de dessus, illustrant l'empilement de feuilles anodique et cathodique ainsi que les zones vides de faible dimension, i.e des fentes ménagées dans des feuilles adjacentes, selon l'invention.
[Fig. 4] est une vue de dessus, à plus grande échelle, illustrant des zones vides de faible dimension, i.e des fentes ménagées dans des feuilles adjacentes, selon l'invention.
[Fig. 5] est une vue en perspective, également à grande échelle, illustrant ces zones vides de faible dimension, i.e ces fentes ménagées dans des feuilles adjacentes.
[Fig. 6] est une vue de dessus, illustrant une étape de découpe réalisée sur différentes fentes ménagées dans l'empilement des figures précédentes.
[Fig. 7] est une vue de dessus, illustrant une ligne de batteries selon l'invention obtenue après découpes de l'empilement selon les lignes de découpe DXₙ et DX'ₙ.
[Fig. 8] est une vue en coupe, selon la ligne de coupe VIII-VIII qui correspond à la ligne de découpe DX'ₙ, indiquée sur la figure 6 illustrant l'empilement, selon l'invention, des feuilles anodique et cathodique présentant des fentes.
[Fig. 9] est une vue en coupe, selon la ligne de coupe VIII-VIII qui correspond à la ligne de découpe DX'ₙ, indiquée sur la figure 6 illustrant l'empilement, selon l'invention, des feuilles anodique et cathodique présentant des fentes ainsi que le corps primaire anodique, le corps secondaire anodique, le corps primaire cathodique et le corps secondaire cathodique.
[Fig. 10] est une vue en perspective avec arrachement illustrant une ligne de batteries conforme à l'invention encapsulée dans un système d'encapsulation, qui est susceptible d'être obtenue notamment selon le procédé des figures précédentes.
[Fig. 11] est une vue en perspective avec arrachement illustrant une batterie conforme à l'invention comprenant un système d'encapsulation, qui est susceptible d'être obtenue notamment selon le procédé des figures précédentes.
[Fig. 12] est une vue en perspective avec arrachement illustrant une batterie conforme à l'invention comprenant un système d'encapsulation, qui est susceptible d'être obtenue notamment selon le procédé des figures précédentes et illustrant l'empilement ainsi que le corps primaire anodique, le corps secondaire anodique, le corps primaire cathodique et le corps secondaire cathodique.
[Fig.13] est une vue en coupe, selon la ligne de coupe VIII-VIII ou la ligne de découpe DX'ₙ, illustrant une batterie conforme à l'invention comprenant un système d'encapsulation et des organes de contact, qui est susceptible d'être obtenue notamment selon le procédé des figures précédentes.
[Fig. 14] est une vue en perspective illustrant une batterie avec arrachement selon l'art antérieur.
[Fig. 15] est une vue de dessus, illustrant l'empilement de feuilles anodique et cathodique ainsi que les zones vides dites de grande dimension, i.e. les entailles ménagées dans des feuilles adjacentes, selon une première variante de l'invention.
[Fig. 16] est une vue de dessus, illustrant une étape de découpe réalisée sur différentes entailles ménagées dans l'empilement de la figure précédente selon la première variante de l'invention, et montrant les batteries obtenues selon cette même variante.
[Fig. 17] est une vue de dessus, illustrant l'empilement de bandes anodique et cathodique ainsi que les espacements prévus entre des bandes adjacentes, selon une seconde variante de l'invention.
[Fig. 18] est une vue en coupe, selon la ligne de découpe DX'ₙ, indiquée sur la figure 17 illustrant l'empilement, selon la seconde variante de l'invention.
[Fig. 19] est une vue de dessus, analogue à la figure 6, illustrant une variante de réalisation des fentes ménagées dans l'empilement.
[Fig. 20] est une vue de dessus, illustrant de manière schématique une batterie susceptible d'être obtenue grâce à un empilement pourvu de fentes selon la figure 19.
[Fig. 21] est une vue de dessus, analogue la figure 19, illustrant une variante de réalisation de fentes, qui n'appartient pas à la présente invention.

Les repères suivants sont utilisés sur ces figures et dans la description qui suit :
- 1000: Batterie selon l'invention
- 1002: Zone de connexion anodique
- 1006: Zone de connexion cathodique
- 100, 100', 100": Cellule élémentaire
- 10: Substrat collecteur de courant anodique
- 20: Couche d'anode
- 30: Couche d'un matériau d'électrolyte / Couche d'électrolyte
- 31: Couche de séparateur imprégné ou ultérieurement imprégné d'un électrolyte / Couche de séparateur
- 50: Couche de cathode
- 40: Substrat collecteur de courant cathodique
- 80: Fente dans les feuilles d'anode, fente anodique, zone vide de faible dimension anodique
- 80': Entaille anodique / zone vide dite de grande dimension anodique

- I₈₀: Largeur totale / Dimension latérale totale de la fente anodique 80
- L₈₀: Longueur totale / Dimension longitudinale totale de la fente anodique
- L_{80'}: Longueur totale / Dimension longitudinale totale de l'entaille anodique
- L_{80"}: Longueur totale / Dimension longitudinale totale de l'espace libre anodique
- 70: Fente dans les feuilles de cathode, fente cathodique, zones vides de faible dimension cathodique
- 70': Entaille cathodique / zone vide dite de grande dimension cathodique

- I₇₀: Largeur totale / Dimension latérale totale de la fente cathodique 70
- L₇₀: Longueur totale / Dimension longitudinale totale de la fente
- cathodique L_{70'}: Longueur totale / Dimension longitudinale totale de l'entaille cathodique
- L_{70"}: Longueur totale / Dimension longitudinale totale de l'espace libre cathodique
- 110: Entité anodique
- 111, 141: Corps primaire de 110, respectivement de 140
- 112, 142: Corps secondaire de 110, respectivement de 140
- 113, 143: Espace libre entre 111 et 112, respectivement entre 141 et 142
- 140: Entité cathodique
- LA: Bords latéraux des bandes anodiques
- LC: Bords latéraux des bandes cathodiques
- SA, SA₁, SA₂, ...SAₙ: Strate anodique
- SC, SC₁, SC₂, ...SCₙ: Strate cathodique
- 111', 141': Ébauche primaire de SA, respectivement de SC
- 112', 142': Ébauche secondaire de SA, respectivement de SC
- 80", 70": Zone vide entre 111' et 112', respectivement entre 141' et 142'
- 80": Espace libre ménagé entre deux bandes anodiques voisines selon une direction longitudinale / espace libre anodique
- 70": Espace libre ménagé entre deux bandes cathodiques voisines selon une direction longitudinale / espace libre cathodique
- L₁₁₂: Longueur du corps secondaire de 110
- L₁₁₃: Longueur de l'espace libre entre 111 et 112
- L₁₄₂: Longueur du corps secondaire de 140
- L₁₄₃: Longueur de l'espace libre entre 141 et 142
- C₁, C₂, C₃, C₄, Cₙ, C'₁, C'₂, C'₃, C'₄, C'ₙ: Cande cathodique
- A₁, A₂, A₃, A₄, Aₙ, A'₁, A'₂, A'₃, A'₄, A'ₙ: Bande anodique
- 90: Chutes de matière
- 95: Système d'encapsulation
- 97: Organe de contact
- 97': Organe de contact anodique
- 97'a: Ergot d'organe de contact anodique recouvrant les extrémités des faces adjacentes F1,F2,F3,F5 à la face longitudinale F6
- 97": Organe de contact cathodique
- 97"a: Ergot d'organe de contact cathodique recouvrant les extrémités des faces adjacentes F1,F2,F3,F5 à la face longitudinale F4
- L₁₀₀₀: Longueur de la batterie
- I: Empilement de feuilles anodiques présentant des zones vides et cathodiques présentant des zones vides / Empilement d'au moins une cellule élémentaire
- 2e: Feuille anodique présentant des zones vides telles que des fentes ou des entailles)
- 5e: Feuille cathodique présentant des zones vides telles que des fentes ou des entailles
- 4: Zone centrale perforée de la feuille anodique présentant des entités élémentaires
- 6: Cadre périphérique de la feuille anodique présentant des entités élémentaires
- 7: Perforations présentes aux quatre extrémités des feuilles anodiques
- et: cathodiques
- 8: Ponts de matière entre deux lignes
- I₈: Largeur des ponts
- 9: Seconds ponts de matières entre deux rangées de fentes
- L₉: Longueur des seconds ponts de matières
- XX: Direction longitudinale ou horizontale de l'empilement / de la batterie
- YY: Direction latérale ou transversale de l'empilement / de la batterie
- ZZ: Direction frontale de l'empilement / de la batterie
- L, Lₙ, Lₙ₋₁, Lₙ₊₁ Ligne: des fentes / Ligne de batteries
- R, Rₙ, Rₙ₋₁, Rₙ₊₁: Rangée des fentes
- PA, PA': Plan anodique
- PC, PC': Plan cathodique
- DXₙ₋₁, DX'ₙ₋₁, DXₙ, DX'ₙ, DXₙ₊₁, DX'ₙ₊₁: Première paire de découpes dites découpes accessoires
- DYₙ₋₁, DY'ₙ₋₁, DYₙ, DY'ₙ, DYₙ₊₁, DY'ₙ₊₁: Seconde paire de découpes dites découpes principales
- AA: Interface entre le système d'encapsulation et les organes de contact
- 2000: Batterie selon l'art antérieur
- 200, 200', 200": Cellule élémentaire d'une batterie selon l'art antérieur
- 2002: Zone de connexion anodique d'une batterie selon l'art antérieur
- 2006: Zone de connexion cathodique d'une batterie selon l'art antérieur
- 295: Système d'encapsulation d'une batterie selon l'art antérieur
- F1, F2: Faces frontales de l'empilement (I) / de la batterie (1000)
- F3, F5: Faces latérales de l'empilement (I) / de la batterie (1000)
- F4, F6: Faces longitudinales de l'empilement (I) / de la batterie (1000)
- FF1, FF2: Faces frontales de la ligne de batteries (Lₙ)
- FF3, FF5: Faces latérales de la ligne de batteries (Lₙ)
- FF4, FF6: Faces latérales de la ligne de batteries (Lₙ)

### Description de l'invention

On associe à cette batterie, par convention, les dénominations géométriques suivantes :
ZZ la direction dénommée frontale, à savoir perpendiculaire au plan des différentes couches empilées de la batterie selon l'invention
XX la direction dénommée longitudinale, laquelle est incluse dans le plan des couches empilées et laquelle est parallèle à la plus grande dimension de ces couches formant l'empilement de la batterie selon l'invention, en vue de dessus, à savoir selon la direction frontale
YY la direction dénommée latérale ou transversale, laquelle est incluse dans le plan des couches empilées et laquelle est parallèle à la plus petite dimension de ces couches, en vue de dessus.

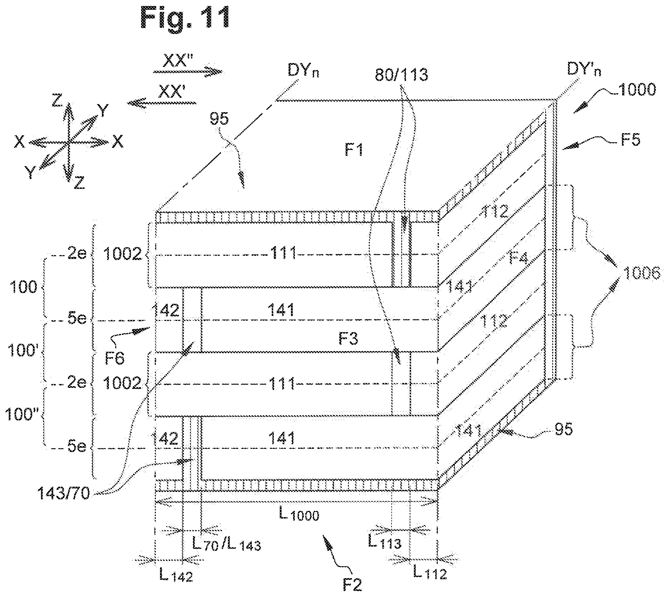

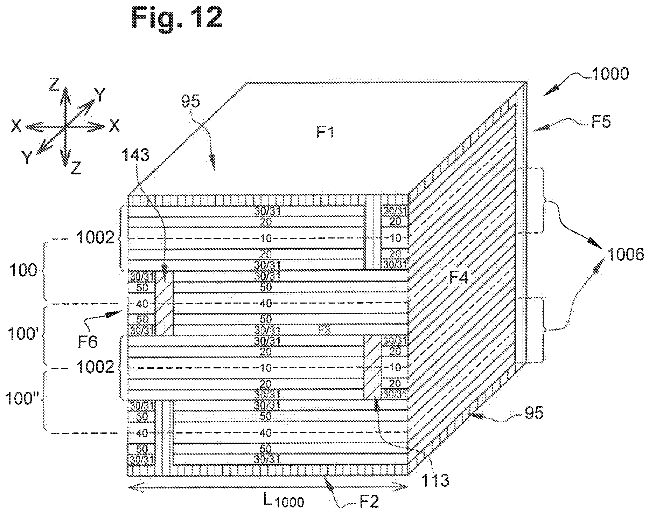

Par convention également, les deux sens associés à chacune de ces trois directions sont donnés en référence au plan de la feuille sur laquelle est reproduite la figure 11 ou la figure 12.

Pour la direction XX, on associe donc le sens vers la droite et le sens vers la gauche, pour la direction YY, on associe le sens vers l'avant et le sens vers l'arrière, et pour la direction ZZ, on associe le sens vers le haut et le sens vers le bas, en référence au plan de la feuille sur laquelle est reproduite la figure 11 ou la figure 12.

Par convention également, on définit un premier sens longitudinal **XX'** dirigé de droite à gauche et un second sens longitudinal **XX",** opposé au premier sens longitudinal **XX',** à savoir dirigé de gauche à droite, en référence au plan de la feuille sur laquelle est reproduite la figure 11 ou la figure 12. On définit, toujours en référence au plan de la feuille sur laquelle est reproduite la figure 11 ou la figure 12, un premier sens latéral **YY'** dirigé de l'avant vers l'arrière, un second sens latéral **YY",** opposé au premier sens latéral, un premier sens frontal **ZZ'** dirigé du haut vers le bas, ainsi qu'un second sens frontal **ZZ",** opposé au premier sens frontal.

Pour caractériser les propriétés de barrière d'un système d'encapsulation, on se réfère dans la présente description au coefficient WVTR (Water Vapor Transmission Rate) qui caractérise la perméance à la vapeur d'eau d'un système d'encapsulation. Plus le coefficient WVTR est faible plus le système d'encapsulation est étanche. La perméance à la vapeur d'eau (WVTR) peut être déterminée à l'aide d'une méthode qui fait l'objet du US 7,624,621 et qui est également décrite dans la publication « Structural properties of ultraviolet cured polysilazane gas barrier layers on polymer substrates » par A. Morlier et al., parue dans la revue Thin Solid Films 550 (2014) 85-89.

La présente invention vise la fabrication d'une batterie telle que présentée en figure 11 et en figure 12.

En référence aux figures 11 &12, on a illustré l'une **1000** des batteries conformes à l'invention comprenant au moins une entité anodique **110** et au moins une entité cathodique **140,** disposées l'une au-dessus de l'autre de manière alternée selon une direction frontale **ZZ** de la batterie **1000.**

Chaque entité anodique **110** de la batterie **1000** selon l'invention, comprend, selon la direction frontale **ZZ** de la batterie **1000,** un substrat collecteur de courant anodique **10,** au moins une couche d'anode **20,** et éventuellement une couche d'un matériau d'électrolyte **30** ou d'un séparateur **31** imprégné d'un électrolyte.

Chaque entité cathodique **140** de la batterie **1000** selon l'invention comprend, selon la direction frontale **ZZ** de la batterie **1000,** un substrat collecteur de courant cathodique **40,** au moins une couche de cathode **50,** et éventuellement une couche d'un matériau d'électrolyte **30** ou d'un séparateur **31** imprégné d'un électrolyte.

Comme illustré en figure 11, la batterie **1000** selon l'invention présente six faces. On définit
- deux faces dites frontales **F1, F2** mutuellement opposées, dans l'exemple mutuellement parallèles, globalement parallèles à chaque entité anodique **110** et, à chaque entité cathodique **140,**
- deux faces dites latérales **F3, F5** mutuellement opposées, dans l'exemple mutuellement parallèles ; et
- deux faces dites longitudinales **F4, F6,** mutuellement opposées, dans l'exemple mutuellement parallèles.

Comme représenté en figure 11, la première face longitudinale **F6** de la batterie **1000** comprend au moins une zone de connexion anodique **1002.** La seconde face longitudinale F4 de la batterie **1000** comprend au moins une zone de connexion cathodique **1006.** De la sorte les zones de connexion anodique **1002** et cathodique **1006** sont latéralement opposées. Par ailleurs, chaque entité anodique **110** et chaque entité cathodique **140** comprend, selon une direction longitudinale **XX** de la batterie **1000,** un corps primaire **111, 141** respectif, séparé d'un corps secondaire **112, 142** respectif, par un espace libre **113, 143** de tout matériau d'électrode, et de substrat collecteur de courant. Ainsi pour chaque entité cathodique **140,** le corps primaire **141,** l'espace libre **143** de tout matériau d'électrode, et de substrat collecteur de courant, et le corps secondaire **142** sont disposés les uns à côté des autres selon un premier sens longitudinale **XX'** de la batterie **1000.** De manière analogue, pour chaque entité anodique **110,** le corps primaire **111,** l'espace libre **113** de tout matériau d'électrode, et de substrat collecteur de courant, et le corps secondaire **112** sont disposés les uns à côté des autres selon un second sens longitudinale **XX",** opposé au premier sens longitudinal **XX',** de la batterie **1000.**

Comme représenté en figure 11, la batterie **1000** selon l'invention comprend, à titre d'exemple non limitatif, plusieurs espaces libres **113, 143,** selon ladite direction frontale **ZZ** de la batterie. De la sorte, en vue de dessus, les espaces libres ménagés entre chaque corps primaire **111** et chaque corps secondaire **112** de chaque entité anodique **110** sont superposés, et les espaces libres ménagés entre chaque corps primaire **141** et chaque corps secondaire **142** de chaque entité cathodique **140** sont superposés. Par ailleurs, les espaces libres **113, 143** de chaque entité anodique **110** et de chaque entité cathodique **140** ne sont pas confondus.

La batterie selon l'invention est formée à partir d'un empilement **I** comprenant, selon la direction longitudinale **XX,** x rangées avec x strictement supérieur à 1, ainsi que y ligne(s) avec y supérieur ou égal à 1, de manière à former un nombre (x*y) de batteries. L'empilement **I** est formé par une succession alternée de strates respectivement cathodique **SC, SC₁, SC₂, ...SCₙ** et anodique **SA, SA₁, SA₂, ...SAₙ** , chaque strate cathodique **SC, SC₁, SC₂, ...SCₙ** étant destinée à former un nombre (x*y) d'entités cathodiques **140** alors que chaque strate anodique **SA, SA₁, SA₂, ...SAₙ** est destinée à former un nombre (x*y) d'entités anodiques**110**.

Chaque strate anodique **SA, SA₁, SA₂, ...SAₙ** de l'empilement **I** selon l'invention, comprend, selon la direction frontale **ZZ** de l'empilement I, parallèle à la direction frontale **ZZ** de la batterie finale **1000,** un substrat collecteur de courant anodique **10,** au moins une couche d'anode **20,** et éventuellement une couche d'un matériau d'électrolyte **30** ou d'un séparateur **31** imprégné d'un électrolyte.

Chaque strate cathodique **SC, SC₁, SC₂, ...SCₙ** de l'empilement **I** selon l'invention, comprend, selon la direction frontale **ZZ** de l'empilement **I,** parallèle à la direction frontale **ZZ** de la batterie finale **1000,** un substrat collecteur de courant cathodique **40,** au moins une couche de cathode **50,** et éventuellement une couche d'un matériau d'électrolyte **30** ou d'un séparateur **31** imprégné d'un électrolyte.

Chaque strate **SA, SA₁, SA₂, ...SAₙ, SC, SC₁, SC₂, ...SCₙ** comprend :
- une pluralité d'ébauches primaires **111', 141',** respectivement anodique **111'** et cathodique **141',** dont chacune est destinée à former un corps primaire **111, 141** respectif,
- une pluralité d'ébauches secondaires **112', 142',** respectivement anodique **112'** et cathodique **142',** dont chacune est destinée à former un corps secondaire **112, 142** respectif.

L'ébauche primaire **111', 141'** et l'ébauche secondaire **112', 142'** sont mutuellement séparées par une zone dite vide **80", 70"** , laquelle est destinée à former au moins un desdits espaces libres **113, 143** de la batterie **1000.**

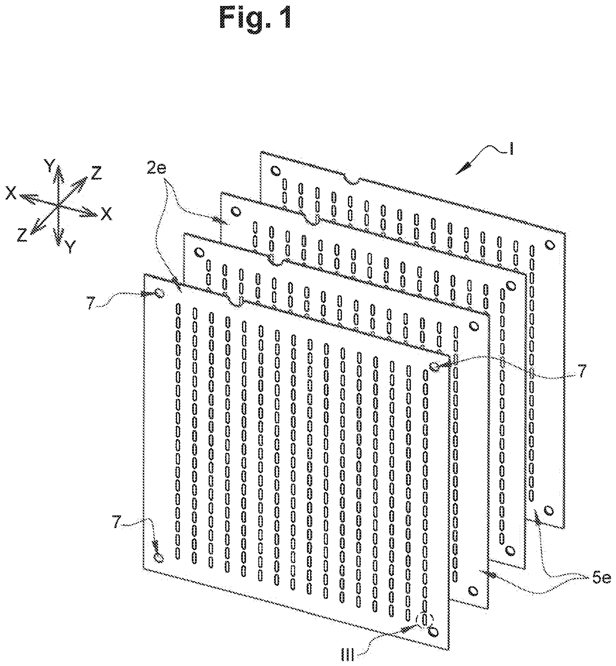

Selon le premier mode de réalisation de l'invention, le procédé conforme à l'invention comprend tout d'abord une étape dans laquelle on réalise un empilement **I** de strates alternées **SA, SA₁, SA₂, ...SAₙ, SC, SC₁, SC₂, ...Sc_{n.}.** Dans ce premier mode de réalisation, chacune de ces strates est une feuille réalisée d'un seul tenant. Dans ce qui suit, ces différentes feuilles sont dénommées, selon le cas, « feuilles anodiques » ou « feuilles cathodiques ». Comme on le verra plus en détail, chaque feuille anodique est destinée à former l'anode de plusieurs batteries, et chaque feuille cathodique est destinée à former la cathode de plusieurs batteries. Dans l'exemple illustré sur la figure 1, on a représenté deux feuilles cathodiques présentant des zones vides de faible dimension, i.e des fentes **5e,** ainsi que deux feuilles anodiques présentant des zones vides de faible dimension, i.e des fentes **2e.** En pratique, cet empilement est formé par un nombre plus élevé de feuilles, typiquement compris entre dix et mille. Le nombre de feuilles cathodiques présentant des fentes **5e** est identique au nombre de feuilles anodiques présentant des fentes **2e** employées constituant l'empilement **I** de feuilles alternées de polarité opposée.

Dans un mode de réalisation avantageux, chacune de ces feuilles présente des perforations **7** à ses quatre coins de manière à ce que lorsque ces perforations **7** sont superposées, toutes les cathodes et toutes les anodes de ces feuilles sont agencées selon l'invention, comme cela sera expliqué en plus grand détail ci-après (cf. figures 1, 2, 3 et 15). Ces perforations **7** peuvent être réalisées par tout moyen approprié, notamment sur des feuilles anodique et cathodique après fabrication, ou sur des feuilles de substrat **10,40** avant fabrication des feuilles anodique et cathodique.

Chaque feuille anodique comprend un substrat collecteur de courant anodique **10** revêtu d'une couche active d'un matériau d'anode **20,** ci-après couche d'anode **20.** Chaque feuille cathodique comprend un substrat collecteur de courant cathodique **40** revêtu d'une couche active d'un matériau de cathode **50,** dénommée ci-après couche de cathode **50.** Chacune de ces couches actives peut être solide, et plus particulièrement de nature dense ou poreuse. Par ailleurs, afin d'éviter tout contact électrique entre deux couches actives de polarités opposées, une couche d'électrolyte **30** ou une couche de séparateur **31** ultérieurement imprégné d'un électrolyte est disposée sur la couche active d'au moins l'un de ces substrats collecteurs de courant préalablement revêtu de la couche active, au contact de la couche active en regard. La couche d'électrolyte **30** ou la couche de séparateur **31,** peut être disposée sur la couche d'anode **20** et/ou sur la couche de cathode **50;** la couche d'électrolyte **30** ou la couche de séparateur **31** fait partie intégrante de la feuille anodique et/ou de la feuille cathodique la comprenant.

Avantageusement, les deux faces du substrat collecteur de courant anodique **10,** respectivement cathodique **40,** sont revêtues d'une couche d'anode **20,** respectivement d'une couche de cathode **50,** et optionnellement d'une couche d'électrolyte **30** ou d'une couche de séparateur **31,** disposée sur la couche d'anode **20,** respectivement sur la couche de cathode **50.** Dans ce cas, le substrat collecteur de courant anodique **10,** respectivement cathodique **40,** sert de collecteur de courant pour deux cellules élémentaires adjacentes **100, 100'.** L'utilisation de ces substrats dans les batteries permet d'accroître le rendement de production des batteries rechargeables à forte densité d'énergie et forte densité de puissance.

La structure mécanique de l'une des feuilles anodiques est décrite ci-après, étant entendu que les autres feuilles anodiques présentent une structure identique. Par ailleurs, comme on le verra dans ce qui suit, les feuilles cathodiques possèdent une structure voisine de celle des feuilles anodiques.

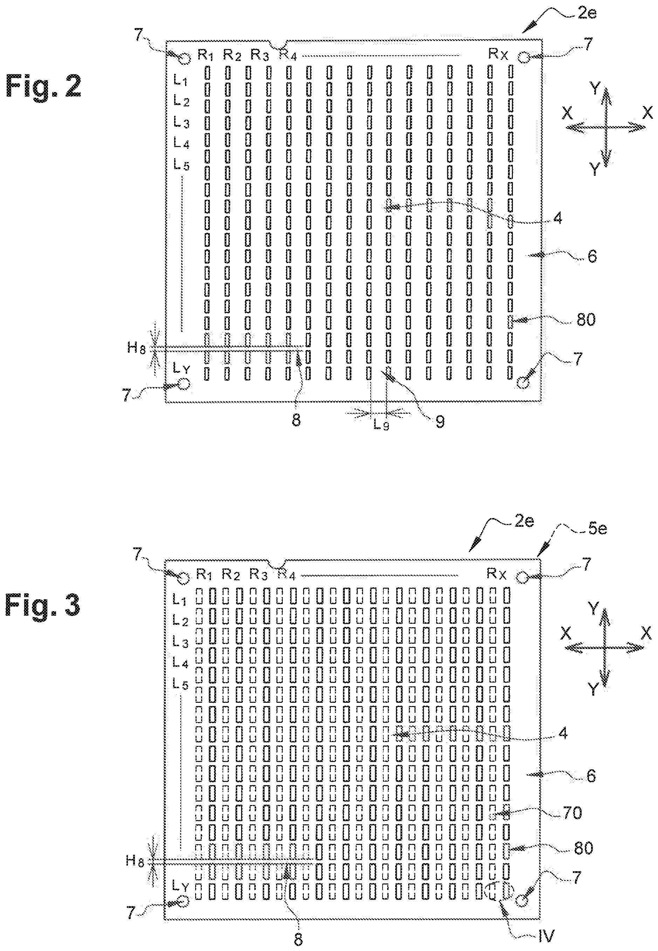

Comme cela est visible sur la figure 2, la feuille anodique **2e** présentant des fentes **80** a une forme de quadrilatère, sensiblement de type rectangulaire. Elle délimite une zone centrale **4** dite perforée, dans laquelle sont ménagées des fentes **80,** i.e. des zones vides dites de faible dimension, exemptes de tout matériau d'électrode, et de substrat collecteur de courant, qui vont être décrites ci-après. En référence au positionnement de ces fentes, une direction dite latérale ou transversale **YY** de la feuille, qui correspond à la direction latérale de ces fentes **80,** ainsi qu'une direction dite horizontale **XX** de la feuille, perpendiculaire à la direction **YY** ont été définies. La zone centrale **4** est bordée par un cadre périphérique **6** qui est plein, à savoir dépourvu de fentes **80.** La fonction de ce cadre **6** est notamment d'assurer une manipulation aisée de chaque feuille.

Les fentes **80** sont réparties selon des lignes **L₁** à **L_{y},** disposées les unes au-dessous des autres, ainsi que selon des rangées **R₁** à **Rₓ** prévues les unes à côté des autres. A titre d'exemples non limitatifs, dans le cadre de la fabrication de micro-batteries de type composant montable en surface (ci-après CMS), les feuilles anodiques et cathodiques employées peuvent être des plaques de 100 mm x 100 mm. De manière typique, le nombre de lignes de ces feuilles est compris entre 10 et 500, alors que le nombre de rangées est compris entre 10 et 500. En fonction de la capacité souhaitée de la batterie, ces dimensions peuvent varier et le nombre de lignes et de rangées par feuilles d'anode et de cathode peut être adapté en conséquence. Les dimensions des feuilles anodique et cathodique employées peuvent en d'autres termes être modulées en fonction des besoins. Comme montré en figure 2, deux lignes adjacentes peuvent être séparées par des ponts de matière **8,** dont on note **I₈** la largeur, laquelle est comprise entre 0,05 mm et 5 mm. Deux rangées adjacentes peuvent être séparées par des seconds ponts de matières **9,** dont on note **L₉** la longueur, laquelle est comprise entre 0,05 mm et 5 mm. Ces ponts **8, 9** de matières des feuilles anodiques et cathodiques confèrent à ces feuilles une rigidité mécanique suffisante pour qu'elles puissent être manipulées aisément.

Les fentes **70,80** sont traversantes, à savoir qu'elles débouchent sur les faces opposées respectivement supérieures et inférieures de la feuille, comme on le verra plus en détail, ci-après. Ces fentes **70,80** ont, de préférence, une forme de quadrilatère, typiquement de type rectangulaire. Dans l'exemple illustré, ces fentes possèdent chacune une forme de I, ce qui leur confère une grande simplicité d'utilisation. Ces fentes **70,80** peuvent être réalisées de manière connue en soi, directement sur le substrat collecteur de courant, avant tout dépôt de matériaux d'anode ou de cathode par gravure chimique, par électroformage, par découpe laser, par microperforation ou par étampage.

Ces fentes **70,80** peuvent aussi être réalisées :
- sur des substrats collecteurs de courant revêtus d'une couche de matériaux d'anode ou de cathode, ou
- sur des substrats collecteurs de courant revêtus d'une couche de matériaux d'anode ou de cathode, elle-même revêtue d'une couche d'électrolyte ou d'une couche de séparateur, i.e. sur des feuilles d'anode ou de cathode.

Lorsque les fentes **70,80** sont opérées sur de tels substrats revêtus, les fentes **70,80** peuvent être réalisées de manière connue en soi, par exemple par découpe laser (ou ablation laser), par découpe au laser femtoseconde, par microperforation ou par étampage.

Comme illustré en figure 3, chaque feuille cathodique est également pourvue de différentes lignes et rangées de fentes cathodiques **70,** prévues en même nombre que les fentes anodiques **80** de chaque feuille anodique. La feuille cathodique obtenue après la réalisation de fentes **70,** est appelée ci-après feuille cathodique présentant des fentes **5e.**

En vue de dessus et comme illustré en figure 3, les fentes cathodiques **70** réalisées dans l'ensemble des feuilles cathodiques **5e** sont confondues, i.e sont mutuellement superposées. De manière analogue, les fentes anodiques **80** réalisées dans l'ensemble des feuilles anodiques **2e** sont confondues, i.e. sont mutuellement superposées.

On va maintenant décrire l'une des fentes **70,80** comme illustré en figures 3, 4 et 5, étant entendu que l'ensemble des fentes **80** de la feuille anodique est identique et que l'ensemble des fentes **70** de la feuille cathodique est identique.

Chaque fente anodique **80** a, de préférence, une forme de quadrilatère, typiquement de type rectangulaire.

On note :
- **I₈₀** la largeur de l'ensemble de la fente anodique **80,** qui est typiquement comprise entre 0,25 mm et 10 mm ;
- **L₈₀** sa longueur qui est typiquement comprise entre 0,01 mm et 0,5 mm.

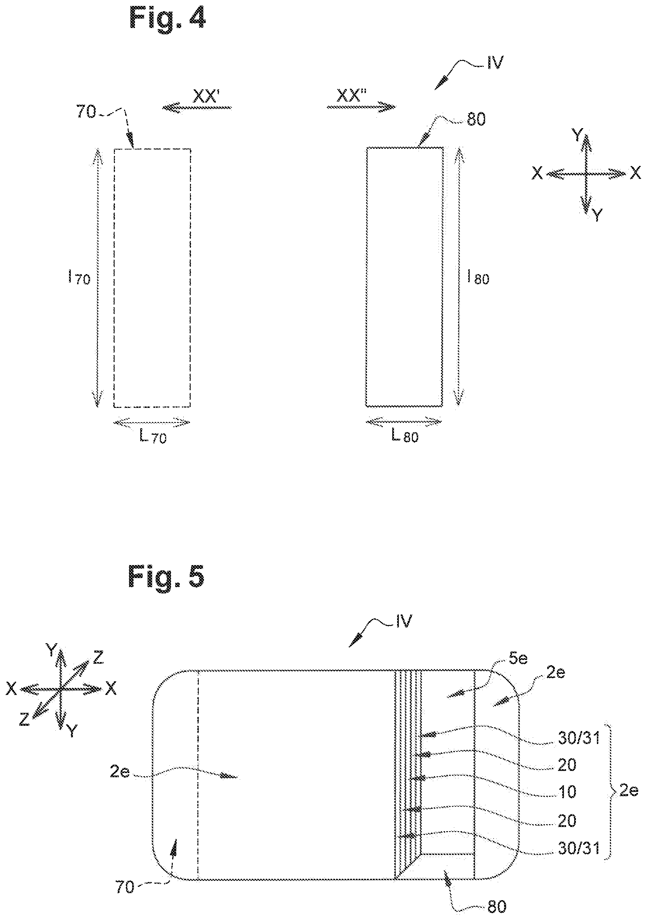

Comme le montre notamment les figures 4 et 5, la structure de chaque fente cathodique **70** est sensiblement analogue à celle de chaque fente anodique **80,** à savoir que chaque fente cathodique **70** a, de préférence, une forme de quadrilatère, typiquement de type rectangulaire.

Les dimensions des fentes cathodiques **70** sont, de préférence, identiques à celles des fentes anodiques **80.**

On note :
- **I₇₀** la largeur de l'ensemble de la fente cathodique **70,** qui est typiquement comprise entre 0,25 mm et 10 mm ;
- **L₇₀** sa longueur qui est typiquement comprise entre 0,01 mm et 0,5 mm.

Comme on l'a vu ci-dessus, les structures des fentes anodique **80** et cathodique **70,** sont analogues. Par ailleurs, en vue de dessus, les fentes anodiques **80** sont décalées par rapport aux fentes cathodiques 70, selon la direction longitudinale **XX.** De la sorte, en vue de dessus, les fentes anodiques **80** et cathodiques **70** ne sont pas confondues et sont distinctes les unes des autres.

L'empilement **I** comprend un agencement alterné d'au moins une feuille anodique **2e** présentant des fentes **80** et d'au moins une feuille cathodique **5e** présentant des fentes **70.** On obtient ainsi au moins une cellule élémentaire **100** comprenant successivement un substrat collecteur de courant anodique **10,** une couche d'anode **20,** une couche d'un matériau d'électrolyte **30** et/ou une couche de séparateur **31** ultérieurement imprégné d'un électrolyte, une couche de cathode **50,** et un substrat collecteur de courant cathodique **40.** Cet empilement **I** est réalisé de sorte qu'en vue de dessus :
- les fentes cathodiques **70** réalisées dans l'ensemble des feuilles cathodiques **5e** sont confondues, i.e sont mutuellement superposées,
- les fentes anodiques **80** réalisées dans l'ensemble des feuilles anodiques **2e** sont confondues, i.e. sont mutuellement superposées, et
- les fentes anodiques **80** et cathodiques **70** ne sont pas confondues et sont distinctes les unes des autres.

Dans le cas où ladite batterie comprend une pluralité de cellules élémentaires **100, 100', 100",** lesdites cellules élémentaires **100, 100', 100"** sont disposées les unes au-dessous des autres, à savoir superposées selon une direction frontale **ZZ** au plan principal de la batterie comme représenté en figure 11, de sorte que, de préférence :
∘ le substrat collecteur de courant anodique **10** est le substrat collecteur de courant anodique **10** de deux cellules élémentaires **100, 100', 100"** adjacentes, et en ce que
∘ le substrat collecteur de courant cathodique **40** est le substrat collecteur de courant cathodique **40** de deux cellules élémentaires **100, 100', 100"** adjacentes.

On suppose que l'empilement **I,** décrit ci-dessus, est soumis à des étapes visant à assurer sa stabilité mécanique globale. Ces étapes, de type connu en soi, incluent notamment le traitement thermique et/ou mécanique des différentes feuilles empilées **2e, 5e** présentant des fentes **80,70.** Comme on va le voir ci-dessous, cet empilement ainsi consolidé permet la formation de batteries individuelles, dont le nombre est égal au produit entre le nombre de lignes Y et le nombre de rangées X.

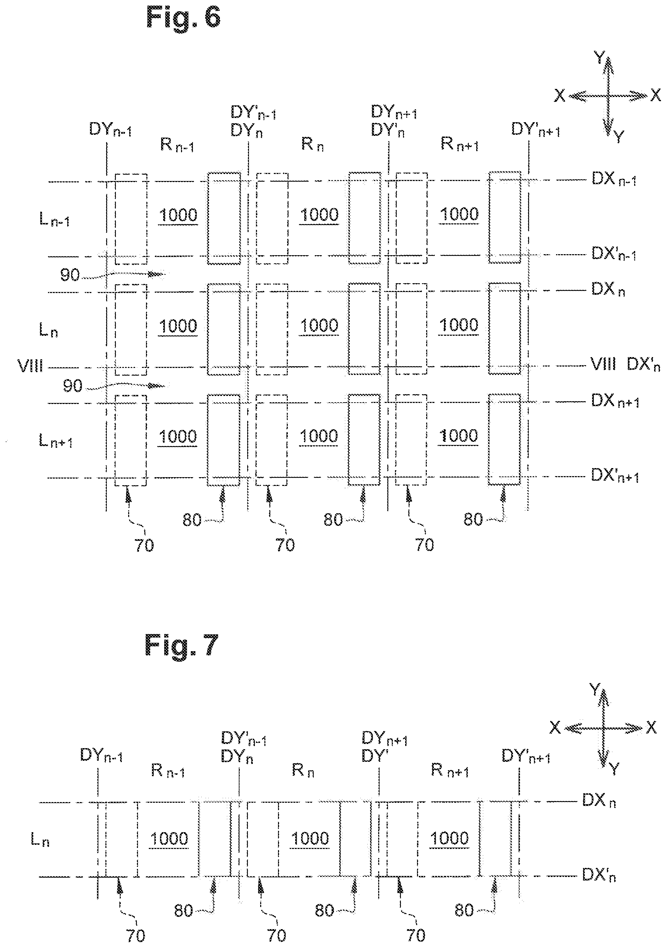

À cet effet, en référence à la figure 6, on a illustré trois lignes **Lₙ₋₁** à **Lₙ₊₁,** ainsi que trois rangées **Rₙ₋₁** à **Rₙ₊₁.** Dans ce qui suit, on nomme ligne de batteries une ligne, appartenant à l'empilement, qui est destinée à former plusieurs batteries. Le nombre de batteries formées, pour une ligne donnée, correspond au nombre de rangées de l'empilement. Conformément à l'invention, et lorsque l'empilement **I** comprend plusieurs lignes aussi appelées ci-après lignes de batteries **Lₙ,** on réalise une première paire de découpes **DXₙ** et **DX'ₙ** permettant de séparer une ligne **Lₙ** de batteries **1000** donnée vis-à-vis d'au moins une autre ligne **Lₙ₋₁, Lₙ₊₁** de batteries formée à partir dudit empilement consolidé, comme cela est représenté en figure 7. Chaque découpe, qui s'effectue de manière traversante, à savoir qu'elle s'étend sur l'ensemble de la hauteur de l'empilement, est réalisée de manière connue en soi. À titre d'exemples non limitatifs, on citera la découpe par sciage, notamment la découpe en dés, la découpe par guillotine ou encore la découpe par laser. De plus, on a illustré avec un remplissage en pointillé les zones **90** des feuilles de l'empilement, qui ne forment pas les batteries, alors que le volume des fentes est laissé en blanc.

Comme le montre notamment la figure 6, qui est une vue à plus grande échelle des fentes ménagées dans des feuilles adjacentes de la figure 3, chaque découpe **DXₙ,DX'ₙ** est réalisée selon la direction frontale **ZZ** de la batterie, indifféremment selon l'un ou l'autre sens. Les découpes **DXₙ** et **DX'ₙ** sont, de préférence, mutuellement parallèles et, sont, de préférence, réalisées de manière perpendiculaire à la fois à l'alignement des fentes anodiques **80** et des fentes cathodiques **70.** Les découpes **DXₙ** et **DX'ₙ** sont réalisées sur l'ensemble de la hauteur de l'empilement au travers des fentes anodiques **80** et des fentes cathodiques **70,** et ce de manière à limiter les chutes de matière **90.**

En référence à nouveau à la figure 6, chaque batterie finale est délimitée, à l'arrière et à l'avant, par la première paire de découpes **DXₙ et DX'ₙ,** de préférence, mutuellement parallèles, et, à gauche et à droite par une seconde paire de découpes **DYₙ** et **DY'ₙ,** de préférence mutuellement parallèles.

Sur cette figure 6 on a représenté de manière hachurée les batteries **1000** une fois obtenues selon la première paire de découpes **DXₙ et DX'ₙ** et selon la seconde paire de découpes **DYₙ** et **DY'ₙ** .

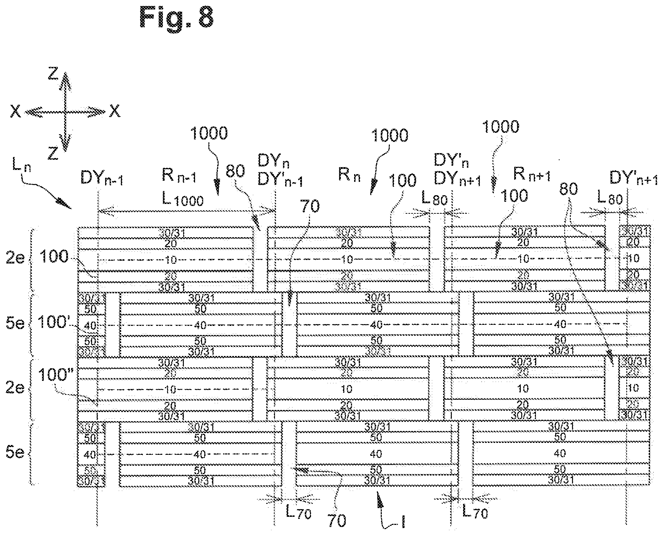

La figure 8 est une vue en coupe, prise selon la ligne de coupe **VIII-VIII** correspondant à la ligne de découpe DX'ₙ comme indiquée sur la figure 6, qui s'étend au travers de la ligne **Lₙ** de batteries. Sur la figure 8, on a représenté l'agencement alterné de deux feuilles anodiques présentant des fentes **2e** et de deux feuilles cathodiques présentant des fentes **5e.** Sur la même figure, on a référencé les fentes **70,80,** illustrées également en figure 6, ainsi que des cellules élémentaires adjacentes selon un mode de réalisation avantageux de l'invention.

La feuille anodique **2e** présentant des zones vides de faible dimension, i.e des fentes comprend un substrat collecteur de courant anodique **10** revêtu d'une couche d'anode **20,** elle-même optionnellement revêtue d'une couche d'électrolyte **30** ou d'une couche de séparateur **31** ultérieurement imprégné d'un électrolyte. Chaque feuille cathodique **5e** présentant des zones vides de faible dimension, i.e des fentes comprend un substrat collecteur de courant cathodique **40** revêtu d'une couche active d'un matériau de cathode **50,** elle-même optionnellement revêtue d'une couche d'électrolyte **30** ou d'une couche de séparateur **31** ultérieurement imprégné d'un électrolyte. Afin d'éviter tout contact électrique entre deux couches actives de polarité opposée, i.e. entre la couche d'anode **20** et la couche de cathode **50,** il est disposé au moins une couche d'électrolyte **30** et/ou au moins une couche de séparateur **31** imprégné ou ultérieurement imprégné d'un électrolyte. Sur la figure 8 est représentée une cellule élémentaire **100** comprenant successivement un substrat collecteur de courant anodique **10,** une couche d'anode **20,** au moins une couche d'un matériau d'électrolyte **30** ou une couche de séparateur **31** imprégné ou ultérieurement imprégné d'un électrolyte, une couche de cathode **50,** et un substrat collecteur de courant cathodique **40.**

Avantageusement, le substrat collecteur de courant anodique **10** d'une cellule élémentaire **100'** peut être accolé au substrat collecteur de courant anodique **10** de la cellule élémentaire adjacente **100".** De manière analogue, les substrats collecteurs de courant cathodiquede deux cellules élémentaires adjacentes **100, 100'** peuvent être accolées l'un à l'autre .

Dans un mode de réalisation avantageux, le substrat collecteur de courant anodique **10,** respectivement cathodique **40,** peut servir de collecteur de courant pour deux cellules élémentaires adjacentes, comme cela est notamment illustré en figure 8. Comme explicité précédemment, les deux faces du substrat collecteur de courant anodique **10,** respectivement cathodique **40,** sont revêtues d'une couche d'anode **20,** respectivement d'une couche de cathode **50,** et optionnellement revêtues d'une couche d'électrolyte **30** ou d'une couche de séparateur **31,** disposée sur la couche d'anode **20,** respectivement sur la couche de cathode **50.** Ceci permet d'accroître le rendement de production des batteries. Comme représenté en figure 8, chaque feuille anodique présentant des fentes **2e** et chaque feuille cathodique présentant des fentes **5e** sont agencées de manière à ce qu'en vue de dessus :
- les fentes cathodiques **70** réalisées dans l'ensemble des feuilles cathodiques **5e** sont confondues, i.e sont mutuellement superposées,
- les fentes anodiques **80** réalisées dans l'ensemble des feuilles anodiques **2e** sont confondues, i.e. sont mutuellement superposées, et
- les fentes anodiques **80** et cathodiques **70** ne sont pas confondues et sont distinctes les unes des autres.

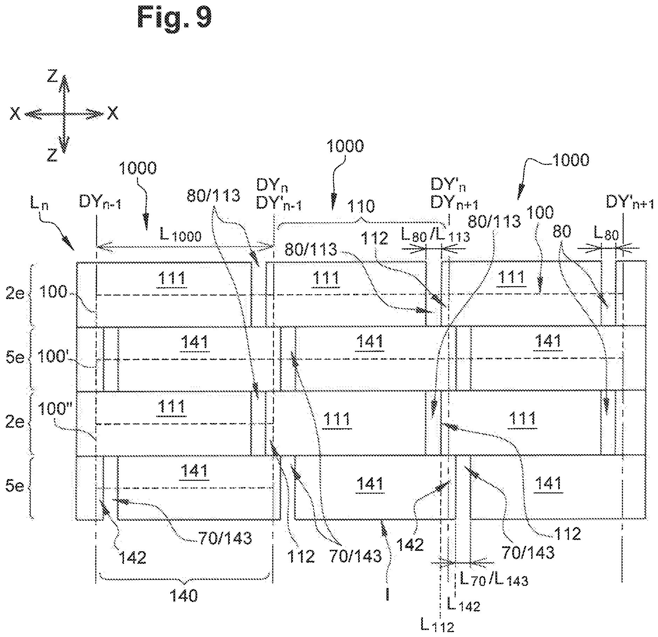

Sur la figure 9, on a représenté l'agencement alterné de deux feuilles anodiques présentant des fentes **2e** et de deux feuilles cathodiques présentant des fentes **5e.** Sur la même figure, on a référencé des lignes de découpes **DYₙ, DY'ₙ** permettant de séparer une batterie **1000** vis à vis des autres batteries d'une ligne **Lₙ** de batteries, la longueur d'une batterie **L₁₀₀₀,** les fentes **70,80,** illustrées également en figure 6, ainsi que des cellules élémentaires adjacentes selon un mode de réalisation avantageux de l'invention. Sur la figure 9, tout comme sur la figure 8, on note que la seconde paire de découpes **DYₙ, DY'ₙ** est réalisée à la fois au travers des entités anodiques **110** et des entités cathodiques **140,** à savoir :
- à une distance **L₁₄₂** des fentes cathodiques **70** de manière à avoir pour chaque entité cathodique **140** de la batterie **1000** un corps primaire **141** séparé d'un corps secondaire **142** par un espace libre **143, 70** de tout matériau de séparateur, de substrat collecteur de courant et d'électrode, notamment de cathode, et
- à une distance **L₁₁₂** des fentes anodiques **80** de manière à avoir pour chaque entité anodique **110** de la batterie **1000** un corps primaire **111** séparé d'un corps secondaire **112** par un espace libre **113, 80** de tout matériau de séparateur, de substrat collecteur de courant et d'électrode, notamment d'anode.

Cette caractéristique est particulièrement avantageuse, puisque cela permet d'améliorer la qualité de la découpe au regard de l'art antérieur et d'éviter la présence de court-circuit au niveau des faces longitudinales **F6,F4** de la batterie, d'éviter la présence de courant de fuite, et de faciliter les prises de contact électrique au niveau des zones de connexion anodiques **1002** et cathodique **1006.**

En référence à la figure 9, et pour chaque batterie **1000** unitaire, on note :
- **70** la fente cathodique, correspondant à l'espace libre **143** existant entre le corps primaire **141** et le corps secondaire **142** de l'entité cathodique **140** ;
- **L₇₀,** la longueur de l'ensemble de la fente cathodique **70** qui est typiquement comprise entre 0,01 mm et 0,5 mm, cette longueur **L₇₀** correspondant à la longueur **L₁₄₃** de l'espace libre **143** existant entre le corps primaire **141** et le corps secondaire **142** de l'entité cathodique **140** ;
- **L₁₄₂,** la longueur du corps secondaire **142** de l'entité cathodique **140,** qui est typiquement comprise entre XXXX mm et XXXXX mm ;
- **80** la fente anodique, correspondant à l'espace libre **113** entre le corps primaire **111** et le corps secondaire **112** de l'entité anodique **110** ;
- **L₈₀,** la longueur de l'ensemble de la fente anodique **80** qui est typiquement comprise entre 0,01 mm et 0,5 mm, cette longueur **L₈₀** correspondant à la longueur **L₁₁₃** de l'espace libre **113** existant entre le corps primaire **111** et le corps secondaire **112** de l'entité anodique **110** ;
- **L₁₁₂,** la longueur du corps secondaire **112** de l'entité anodique **110,** qui est typiquement comprise entre 0,01 mm et 0,5 mm .

Avantageusement, après la réalisation de l'empilement des feuilles anodiques présentant des fentes **2e** et cathodiques présentant des fentes **5e,** on consolide l'empilement I par traitement thermique et/ou mécanique (ce traitement pouvant être un traitement de thermocompression, comprenant l'application simultané d'une pression et d'une température élevée). Le traitement thermique de l'empilement permettant l'assemblage de la batterie est avantageusement réalisé à une température comprise entre 50°C et 500°C, de préférence à une température inférieure à 350 °C. La compression mécanique de l'empilement des feuilles anodiques présentant des fentes **2e** et des feuilles cathodiques présentant des fentes **5e** à assembler est réalisée à une pression comprise entre 10 MPa et 100 MPa, de préférence entre 20 MPa et 50 MPa.

On vient de décrire la réalisation de l'empilement consolidé des feuilles qui constituent la batterie. On peut ensuite, lorsque l'empilement I comprend plusieurs lignes aussi appelées ci-après lignes de batteries **Lₙ,** réaliser une première paire de découpes dites découpes accessoires **DXₙ** et **DX'ₙ** permettant de séparer une ligne Lₙ de batteries **1000** donnée vis-à-vis d'au moins une autre ligne **Lₙ₋₁, Lₙ₊₁** de batteries formée à partir dudit empilement consolidé. Chaque découpe, qui s'effectue de manière traversante, à savoir qu'elle s'étend sur l'ensemble de la hauteur de l'empilement, est réalisée de manière connue en soi, comme indiqué précédemment.

Lorsqu'un séparateur est employé comme matrice hôte d'un électrolyte, on peut imprégner l'empilement consolidé précédemment obtenu ou la ligne **Lₙ** de batteries **1000** lorsque l'empilement **I** initial comprend plusieurs lignes de batteries **Lₙ** et qu'une première paire de découpes (DXₙ, DX'ₙ) a été réalisée afin de séparer la ligne (Lₙ) de batteries (1000) donnée vis-à-vis d'au moins une autre ligne (Lₙ₋₁, Lₙ₊₁) de batteries (1000) formée à partir dudit empilement consolidé. L'imprégnation de l'empilement consolidé précédemment obtenu ou de la ligne **Lₙ** de batteries **1000** peut être réalisée, par une phase porteuse d'ions de lithium telle que des électrolytes liquides ou un liquide ionique contenant des sels de lithium, de sorte que ledit séparateur (31) soit imprégné par un électrolyte.

D'une manière générale, dans le cadre de la présente invention on peut imprégner le séparateur, mais aussi les électrodes. La structure peut également comporter une combinaison d'électrodes solides et/ou mésoporeuses imprégnées et/ou peut comporter un électrolyte solide et/ou un séparateur imprégné.

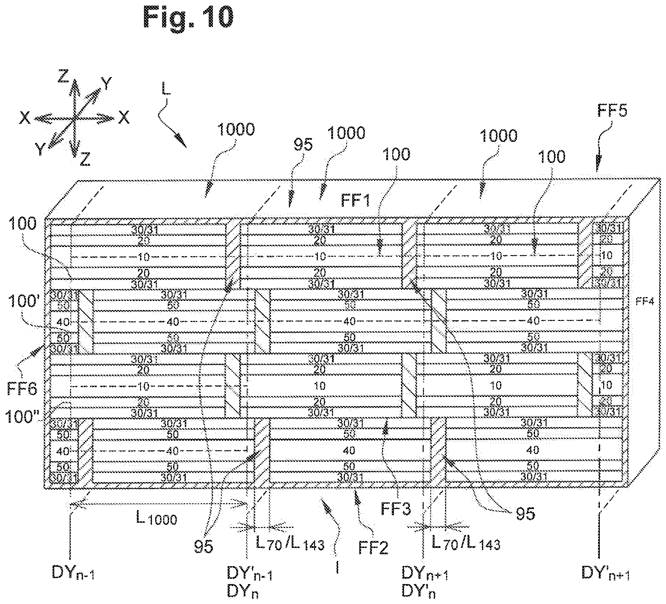

Après la réalisation d'un empilement **I** consolidé ou d'une ligne **Lₙ** de batteries **1000,** éventuellement imprégné(e) par une phase porteuse d'ions de lithium, on encapsule cet empilement ou cette ligne **Lₙ** de batteries **1000** en déposant un système d'encapsulation **95** pour assurer la protection de la cellule de la batterie vis-à-vis de l'atmosphère, comme cela est représenté en figure 10.

La ligne de batteries **Lₙ** ainsi encapsulée présente six faces, à savoir :
- deux faces dites frontales **FF1, FF2** mutuellement opposées, dans l'exemple mutuellement parallèles, globalement parallèles aux entités anodiques, globalement parallèles aux entités cathodiques, globalement parallèles au(x) substrat(s) collecteur de courant anodique **10,** au(x) couche(s) d'anode **20,** au(x) couche(s) d'un matériau d'électrolyte **30** ou au(x) couche(s) de séparateur imprégné d'un électrolyte **31,** au(x) couche(s) de cathode **50,** et au(x) substrat(s) collecteur de courant cathodique **40** ;
- deux faces dites latérales **FF3, FF5** mutuellement opposées, en particulier mutuellement parallèles et parallèles aux faces latérales **F3,F5** de la batterie **1000** ;
- et deux faces dites longitudinales **FF4, FF6,** mutuellement opposées, en particulier mutuellement parallèles et parallèles aux faces longitudinales **F4,F6** de la batterie **1000.**

Le système d'encapsulation doit avantageusement être stable chimiquement, résister à une température élevée et être imperméable à l'atmosphère pour jouer sa fonction de couche barrière.

L'empilement peut être recouvert d'un système d'encapsulation comprenant :
- optionnellement une première couche de recouvrement dense et isolante, de préférence choisi parmi le parylène, le parylène de type F, le polyimide, les résines époxy, le silicone, le polyamide, la silice sol-gel, la silice organique et/ou un mélange de ceux-ci, déposée à la périphérie externe de l'empilement **I** de feuilles anodique **2e** et cathodique **5e,** et, de préférence, aussi dans les espaces libres **113,143** présents entre les corps primaire **111,141** et secondaire **112,142** de chaque entité anodique **110** et chaque entité cathodique **140;** et
- optionnellement une deuxième couche de recouvrement composée d'une matière électriquement isolante, déposée par dépôt de couches atomiques à la périphérie externe de l'empilement **I** de feuilles anodique **2e** et cathodique **5e,** et, de préférence, aussi dans les espaces libres **113,143** présents entre les corps primaire **111,141** et secondaire **112,142** de chaque entité anodique **110** et chaque entité cathodique **140,** ou sur ladite première couche de recouvrement ; et
- de manière particulièrement avantageuse, au moins une troisième couche de recouvrement étanche, de préférence ayant un coefficient WVTR inférieur à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée à la périphérie externe de l'empilement **I** de feuilles anodique **2e** et cathodique **5e,** et, de préférence, aussi dans les espaces libres **113,143** présents entre les corps primaire **111,141** et secondaire **112,142** de chaque entité anodique **110** et chaque entité cathodique **140** ou sur ladite première couche de recouvrement,
étant entendu qu'une séquence d'au moins une deuxième couche de recouvrement et d'au moins une troisième couche de recouvrement peut être répétée z fois avec z ≥ 1 et déposée à la périphérie externe d'au moins la troisième couche de recouvrement, et que la dernière couche du système d'encapsulation est une couche de recouvrement étanche, de préférence ayant un coefficient WVTR inférieur à 10⁻⁵ g/m².d qui est composée d'un matériau céramique et/ou d'un verre à bas point de fusion.

Cette séquence peut être répétée z fois avec z ≥ 1. Elle présente un effet barrière, qui est d'autant plus important que la valeur de z est élevée.

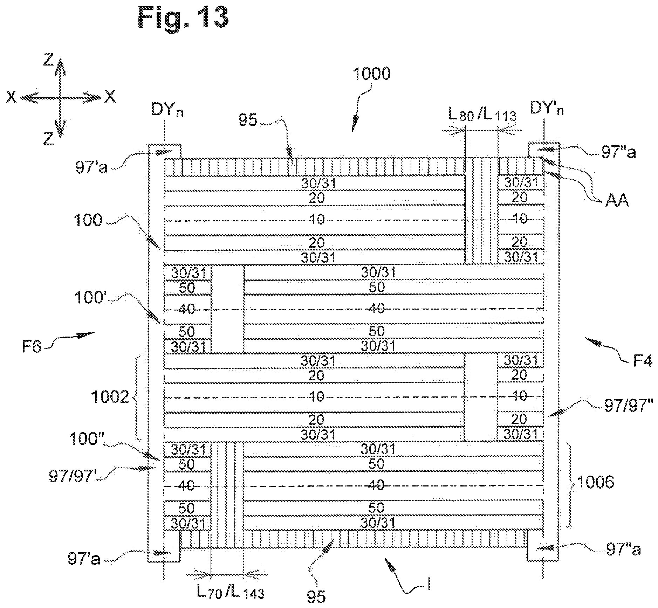

On obtient ainsi une encapsulation rigide et étanche, qui empêche notamment le passage de la vapeur d'eau au niveau de l'interface entre le système d'encapsulation et les organes de contact (cf. interface **AA** représentée en figure 13).

Typiquement, la première couche de recouvrement, qui est optionnelle, est sélectionnée dans le groupe formé par : les silicones (déposés par exemple par imprégnation ou par dépôt chimique en phase vapeur assisté par plasma à partir d'hexaméthyldisiloxane (HMDSO)), les résines époxy, le polyimide, le polyamide, le poly-para-xylylène (appelé aussi poly(p-xylylène, mais plus connu sous le terme parylène), et/ou un mélange de ceux-ci. Lorsqu'une première couche de recouvrement est déposée, elle permet de protéger les éléments sensibles de la batterie de son environnement. L'épaisseur de ladite première couche de recouvrement est, de préférence, comprise entre 0,5 µm et 3 µm.

Cette première couche de recouvrement est utile surtout lorsque les couches d'électrolytes et d'électrodes de la batterie présentent des porosités : elle agit comme une couche de planarisation, qui présente également un effet de barrière. A titre d'exemple, cette première couche est capable de tapisser l'ensemble des surfaces accessibles de l'empilement ou de la ligne **Lₙ** de batteries **1000,** notamment e la périphérie externe de l'empilement ou de la ligne **Lₙ** de batteries **1000,** pour fermer l'accès des microporosités débouchantes présentes à la surface de l'empilement **I** ou de la ligne **Lₙ** de batteries **1000.**

Dans cette première couche de recouvrement, différentes variantes de parylène peuvent être utilisées. Elle peut être en parylène de type C, en parylène de type D, en parylène de type N (CAS 1633-22-3), en parylène de type F, ou en un mélange de parylène de type C, D, N et/ou F. Le parylène est un matériau diélectrique, transparent, semi cristallin, qui présente une grande stabilité thermodynamique, une excellente résistance aux solvants ainsi qu'une très faible perméabilité. Le parylène a également des propriétés barrières. On préfère dans le cadre de la présente invention le parylène de type F.

Cette première couche de recouvrement est avantageusement obtenue à partir de la condensation de monomères gazeux déposés par dépôt chimique en phase vapeur (CVD, Chemical Vapor Déposition) sur les surfaces de l'empilement de la batterie, ce qui permet d'avoir un recouvrement conformal, mince et uniforme de l'ensemble des surfaces accessibles de l'empilement. Cette première couche de recouvrement est avantageusement rigide ; elle ne peut pas être considérée comme une surface souple.

La deuxième couche de recouvrement, qui est également optionnelle, est composée d'une matière électriquement isolante, de préférence inorganique. Elle est déposée par dépôt de couches atomiques (en anglais « Atomic Layer Déposition », ALD), par PECVD, par HDPCVD (en anglais « High Density Plasma Chemical Vapor Déposition ») ou par ICPCVD (« Inductively Coupled Plasma Chemical Vapour Déposition » en anglais), de manière à obtenir un recouvrement conformal de l'ensemble des surfaces accessibles de l'empilement préalablement recouvert de la première couche de recouvrement. Les couches déposées par ALD sont très fragiles mécaniquement et nécessitent une surface d'appui rigide pour assurer leur rôle protecteur. Le dépôt d'une couche fragile sur une surface souple conduirait à la formation de fissures, engendrant une perte d'intégrité de cette couche de protection. Par ailleurs, la croissance de la couche déposée par ALD est influencée par la nature du substrat. Une couche déposée par ALD sur un substrat présentant des zones de natures chimiques différentes aura une croissance inhomogène, pouvant engendrer une perte d'intégrité de cette couche de protection. Pour cette raison il est préférable que cette deuxième couche optionnelle, si elle est présente, prenne appui sur ladite première couche optionnelle, ce qui assure un substrat de croissance chimiquement homogène.

Les techniques de dépôt par ALD sont particulièrement bien adaptées pour recouvrir des surfaces présentant une forte rugosité de manière totalement étanche et conforme. Elles permettent de réaliser des couches conformales, exemptes de défauts, tels que des trous (couches dits « pinhole free », i.e. exempts de trous) et représentent de très bonnes barrières. Leur coefficient WVTR est extrêmement faible. L'épaisseur de cette deuxième couche est avantageusement choisie en fonction du niveau d'étanchéité aux gaz souhaité, i.e du coefficient WVTR souhaité et dépend de la technique de dépôt utilisée, notamment parmi l'ALD, le PECVD, le HDPCVD et le ICPCVD.

Ladite deuxième couche de recouvrement peut être en matériau céramique, en matériau vitreux ou en matériau vitrocéramique, par exemple sous forme d'oxyde, de type Al₂O₃, de Ta₂O₅, de nitrure, de phosphates, d'oxynitrure, ou de siloxane. Cette deuxième couche de recouvrement présente, de préférence, une épaisseur comprise 10 nm et 5 µm, de préférence entre 10 nm et 50 nm.

Cette deuxième couche de recouvrement déposée par ALD, par PECVD, par HDPCVD ou par ICPCVD sur la première couche de recouvrement permet d'une part, d'assurer l'étanchéité de la structure, i.e. d'empêcher la migration de l'eau à l'intérieur de l'objet et d'autre part de protéger la première couche de recouvrement, de préférence de parylène de type F, de l'atmosphère, notamment de l'air et de l'humidité, des expositions thermiques afin d'éviter sa dégradation. Cette deuxième couche de recouvrement améliore ainsi la durée de vie de la batterie encapsulée.

Ladite deuxième couche de recouvrement peut aussi être déposée directement sur l'empilement de feuilles anodiques et cathodique, c'est-à-dire dans un cas où ladite première couche de recouvrement n'a pas été déposée.

La troisième couche de recouvrement doit être étanche et présente de préférence un coefficient WVTR inférieur à 10⁻⁵ g/m².d. Cette troisième couche de recouvrement est composée d'un matériau céramique et/ou d'un verre à bas point de fusion, de préférence d'un verre dont le point de fusion est inférieur à 600°C, déposée à la périphérie externe de l'empilement de feuilles anodique et cathodique ou de la première couche de recouvrement. Le matériau céramique et/ou verre employé dans cette troisième couche est, avantageusement choisi parmi :
- un verre à bas point de fusion (typiquement < 600°C), de préférence SiO₂-B₂O₃ ; Bi₂O₃-B₂O₃, ZnO-Bi₂O₃-B₂O₃, TeO₂-V₂O₅, PbO-SiO₂,
- des oxydes, des nitrures, des oxynitrures, du SiₓN_{y}, SiO₂, SiON du Silicium amorphe ou du SiC.

Ces verres peuvent être déposés par moulage ou par dip-coating.

Les matériaux céramiques sont avantageusement déposés par PECVD ou préférentiellement par HDPCVD ou par ICP CVD à basse température ; ces procédés permettent de déposer une couche ayant de bonnes propriétés d'étanchéité.

Comme cela est notamment représenté en figure 10, l'empilement ainsi encapsulé ou la ligne **Lₙ** de batterie **1000** ainsi encapsulée, est ensuite découpé(e) par tout moyen approprié selon une seconde paire de découpe **DYₙ** et **DY'ₙ** de manière à obtenir des batteries unitaires et à mettre à nu les zones de connexions anodiques **1002** et cathodiques **1006** de chaque batterie **1000** unitaire. Avantageusement et comme représenté sur la figure 10, la ligne **Lₙ** de batteries **100** est découpée selon les paires de découpe **DYₙ₋₁** et **DY'ₙ₋₁, DYₙ** et **DY'ₙ, DYₙ₊₁** et **DY'ₙ₊₁** de manière à obtenir des batteries **1000** unitaires. De la sorte, les ligne de découpes **DY'ₙ₋₁** et **DYₙ** sont confondues, tout comme les lignes de découpes **DY'ₙ** et **DYₙ₊₁.** Ceci permet de réduire le nombre de découpes effectives, et ainsi d'améliorer le rendement de production des batteries.

Selon l'invention, et de manière particulièrement avantageuse, la seconde paire de découpes **DYₙ, DY'ₙ** comme représenté en figure 11, est réalisée à la fois au travers des entités anodiques **110** et des entités cathodiques **140,** à savoir :
- à une distance **L₁₄₂** des fentes cathodiques **70** de manière à avoir pour chaque entité cathodique **140** de la batterie **1000** un corps primaire **141** séparé d'un corps secondaire **142** par un espace libre **143, 70** de tout matériau de séparateur, de substrat collecteur de courant et d'électrode, notamment de cathode, et
- à une distance **L₁₁₂** des fentes anodiques **80** de manière à avoir pour chaque entité anodique **110** de la batterie **1000** un corps primaire **111** séparé d'un corps secondaire **112** par un espace libre **113, 80** de tout matériau de séparateur, de substrat collecteur de courant et d'électrode, notamment d'anode.

Les figures 11 et 12 représentent une batterie avec arrachement conforme à l'invention.

Des organes de contact **97,97', 97"** (contacts électriques) sont ajoutés au niveau où les zones de connexions cathodiques **1006,** respectivement anodiques **1002** sont apparentes. Ces zones de contact sont, de préférence, disposées sur des côtés opposés de l'empilement de la batterie pour collecter le courant (collecteurs de courant latéraux). Les organes de contact **97,97', 97"** sont disposés sur au moins la zone de connexion cathodique **1006** et sur au moins la zone de connexion anodique **1002,** de préférence sur la face de l'empilement encapsulé et découpé comprenant au moins la zone de connexion cathodique **1006** et sur la face de l'empilement enrobé et découpé comprenant au moins la zone de connexion anodique **1002** (cf. figure 13).

Ainsi, on recouvre au moins la zone de connexion anodique **1002,** de préférence au moins la première face longitudinale **F6** comprenant au moins la zone de connexion anodique **1002,** et plus préférentiellement la première face longitudinale **F6** comprenant au moins la zone de connexion anodique **1002** ainsi que les extrémités **97'a** des faces adjacentes **F1,F2,F3,F5** à cette première face longitudinale **F6,** par un organe de contact anodique **97',** apte à assurer le contact électrique entre l'empilement **I** et un élément conducteur externe. Par ailleurs, on recouvre au moins la zone de connexion cathodique **1006,** de préférence au moins la seconde face longitudinale **F4** comprenant au moins la zone de connexion cathodique **1006,** et plus préférentiellement la seconde face longitudinale **F4** comprenant au moins la zone de connexion cathodique **1006** ainsi que les extrémités **97"a** des faces adjacentes **F1,F2,F3,F5** à cette seconde face longitudinale **F4,** par un organe de contact cathodique **97",** apte à assurer le contact électrique entre l'empilement **I** et un élément conducteur externe (cf. figure 13).

De préférence, aux abords des zones de connexions cathodique **1006** et anodique **1002** comme indiqué précédemment, les organes de contact **97,97', 97"** sont constitués, d'un empilement de couches de connexion électrique comprenant successivement une première couche de connexion électrique comprenant un matériau chargé en particules électriquement conductrices, de préférence une résine polymérique et/ou un matériau obtenu par un procédé sol-gel, chargé en particules électriquement conductrices et encore plus préférentiellement une résine polymérique chargée en graphite, et une deuxième couche constituée d'une feuille métallique disposée sur la première couche de connexion électrique.

La -première couche de connexion électrique permet de fixer la deuxième couche de connexion électrique subséquente tout en procurant de la « souplesse » à la connectique sans rompre le contact électrique lorsque le circuit électrique est soumis à des contraintes thermiques et/ou vibratoires.

La deuxième couche de connexion électrique est, avantageusement, une feuille métallique. Cette deuxième couche de connexion électrique est utilisée pour protéger durablement de l'humidité les batteries. D'une manière générale, pour une épaisseur donnée de matériau, les métaux permettent de réaliser des films très étanches, plus étanches que ceux à base de céramiques et encore plus étanches que ceux à base de polymères qui sont généralement peu hermétiques au passage de molécules d'eau. Elle permet d'augmenter la durée de vie calendaire de la batterie en réduisant le coefficient WVTR au niveau des organes de contact.

Avantageusement, une troisième couche de connexion électrique comprenant une encre conductrice peut être déposée sur la deuxième couche de connexion électrique ; elle sert à réduire le coefficient WVTR, ce qui augmente la durée de vie de la batterie.

Les organes de contact **97,97', 97"** permettent de reprendre les connexions électriques alternativement positives et négatives sur chacune des extrémités. Ces organes de contact **97,97', 97"** permettent de réaliser les connexions électriques en parallèle entre les différents éléments de batterie. Pour cela, seules les connexions cathodiques sont disponibles sur une extrémité, et les connexions anodiques sont disponibles sur une autre extrémité.

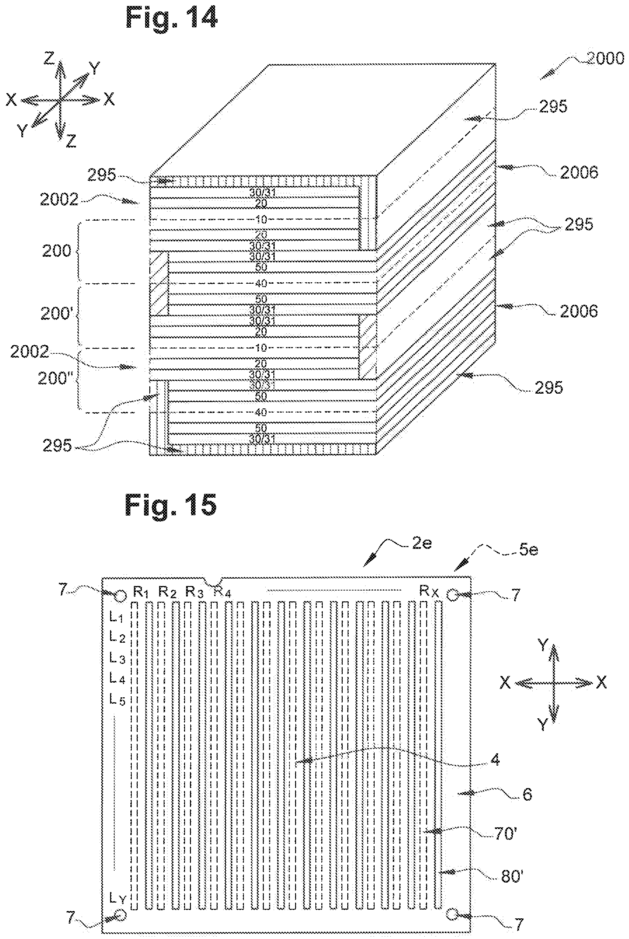

La demande WO 2016/001584 décrit des empilements de plusieurs cellules élémentaires, constituées de feuilles anodiques et cathodiques empilées de manière alternée et décalée latéralement (cf. figure 14), encapsulés dans un système d'encapsulation **2095** pour assurer la protection de la cellule de la batterie **2000** vis-à-vis de l'atmosphère. La découpe de ces empilements encapsulés permettant d'obtenir des batteries unitaires, avec des zones de connexions anodique **2002** et cathodique **2006** à nu, est réalisée selon un plan de coupe traversant une succession alternée d'électrode et de système d'encapsulation. De par la différence de densité existant entre l'électrode et le système d'encapsulation de la batterie de l'art antérieur, la découpe réalisée selon ce plan de coupe induit un risque d'arrachement du système d'encapsulation aux abords du plan de coupe, et ainsi la création de courts-circuits. Dans la demande WO 2016/001584, lors de l'encapsulation, la couche d'encapsulation remplit les interstices de l'empilement des feuilles portant des découpes en forme de U. Cette couche d'encapsulation introduite au niveau de ces interstices est épaisse et n'adhère pas très bien à l'empilement induisant ce risque d'arrachement du système d'encapsulation **2095** lors de la découpe ultérieure.

Selon la présente invention, ce risque est supprimé avec l'emploi de feuilles selon l'invention portant des fentes où, en vue de dessus :
- les fentes cathodiques **70** (qui vont former les espaces libres **143, 70** de tout matériau de séparateur, de substrat collecteur de courant et d'électrode, notamment de cathode) réalisées dans l'ensemble des feuilles cathodiques **5e** sont confondues, i.e sont mutuellement superposées,
- les fentes anodiques **80** (qui vont former les espaces libres **113, 80** de tout matériau de séparateur, de substrat collecteur de courant et d'électrode notamment d'anode) réalisées dans l'ensemble des feuilles anodiques **2e** sont confondues, i.e. sont mutuellement superposées, et
- les fentes anodiques **80** et cathodiques **70** ne sont pas confondues et sont distinctes les unes des autres.

De la sorte, chaque entité cathodique **140** de la batterie **1000** comprend un corps primaire **141** séparé d'un corps secondaire **142** par un espace libre **143, 70** de tout matériau de séparateur, de substrat collecteur de courant et d'électrode, notamment de cathode. De manière analogue, chaque entité anodique **110** de la batterie **1000** comprend un corps primaire **111** séparé d'un corps secondaire **112** par un espace libre **113, 80** de tout matériau de séparateur, de substrat collecteur de courant et d'électrode notamment d'anode (cf. figure 11).

La structure mécanique thermopressée de l'empilement est extrêmement rigide aux abords des découpes selon les lignes de découpe **DY'ₙ** et **DYₙ,** du fait de la superposition alternée de feuilles cathodique et anodique. L'utilisation d'une telle structure rigide, avec l'emploi de feuilles portant des fentes, permet de réduire le nombre de défauts lors des découpes, d'accroître la vitesse de découpe, d'améliorer le rendement de production des batteries tout en minimisant les chutes de matières.

Selon l'invention, les découpes **DY'ₙ** et **DYₙ** sont effectuées au travers des feuilles anodiques présentant des fentes **2e** et des feuilles cathodiques présentant des fentes **5e** de densité comparable induisant une découpe propre de meilleure qualité. De plus la présence d'un espace libre de tout matériau d'électrode, et de substrat collecteur de courant empêche tout risque de court-circuit.

Comme représenté en figure 11, chaque entité cathodique **140** comprend un corps primaire **141,** un corps secondaire **142,** ainsi qu'un espace **143** libre de tout matériau d'électrode, et de substrat collecteur de courant. Ce dernier, dont la longueur L₇₀, L₁₄₃ correspond à celle de la fente cathodique **70** décrite ci-dessus, s'étend selon une direction latérale **YY** sur toute la largeur de la batterie **1000.** De manière analogue, chaque entité anodique **110** comprend un corps principal **111,** un corps secondaire **112** ainsi qu'un espace **113** libre de tout matériau d'électrode, et de substrat collecteur de courant.

Ce dernier, dont la longueur **L₈₀, L₁₁₃** correspond à celle de la fente anodique **80** décrite ci-dessus, s'étend selon une direction latérale **YY** sur toute la largeur de la batterie **1000.** Les zones de connexion anodique **1002** et les zones de connexion cathodique **1006** sont de préférence latéralement opposées comme illustré en figures 11 et 12.

La structure singulière de la batterie selon l'invention permet d'éviter la présence de court-circuit au niveau des faces longitudinales **F4,F6** de la batterie, d'éviter la présence de courant de fuite et de faciliter les prises de contact électrique au niveau des zones de connexion anodiques **1002** et cathodique **1006.**

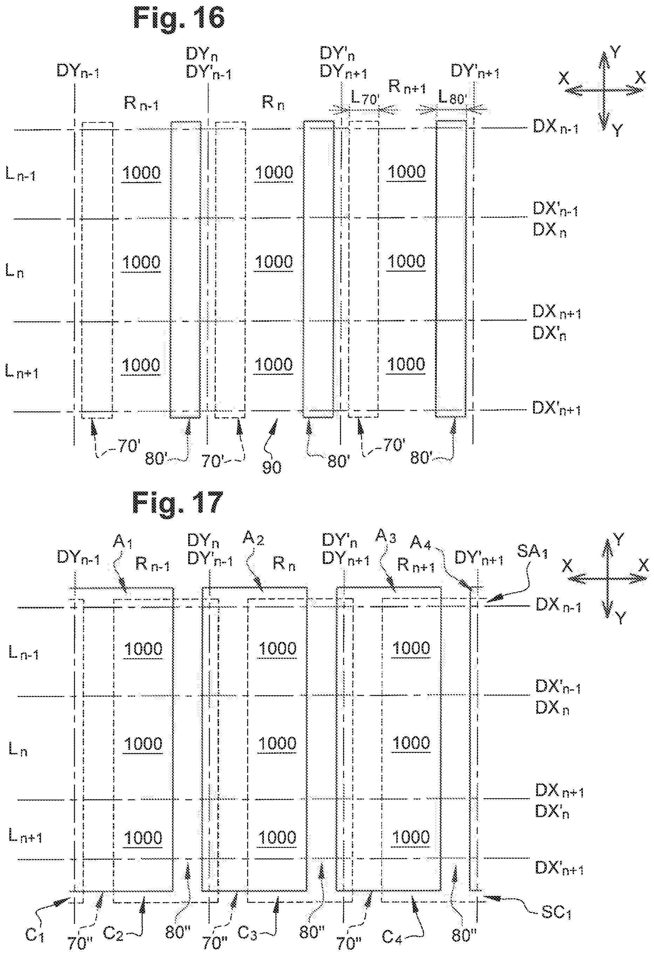

Les batteries selon l'invention peuvent être réalisées selon différentes variantes. Les figures 15 et 16 illustrent une variante du premier mode de réalisation de l'invention. La seule différence, entre la variante de ces figures 15 et 16 et la variante principale ci-dessus, réside dans le fait que les feuilles anodiques et cathodiques ne présentent plus des fentes **70,80** ( zones vides dites de faible dimension, exemptes de tout matériau d'électrode, et de substrat collecteur de courant) mais des entailles **70',80'.** Ces entailles forment. des zones vides dites de grande dimension, exemptes de tout matériau d'électrode, et de substrat collecteur de courant. Dans cette variante, les entailles anodiques **80',** respectivement les entailles cathodiques **70',** sont réparties les unes à côté des autres selon des rangées **R₁** à. Ces entailles anodiques **80',** respectivement cathodiques **70',** ont, de préférence, une forme de quadrilatère, typiquement de type rectangulaire. Dans l'exemple illustré, ces entailles présentent également une forme de I, comme les fentes du premier mode de réalisation. Cependant, comme cela ressort de ce qui précède, ces entailles **70', 80'** sont nettement plus allongées que les fentes, à savoir qu'elles présentent une dimension longitudinale bien supérieure à celle de ces fentes. Par conséquent, la variante des figures 15 et 16 diffère de la variante principale ci-dessus, en ce que à la fois chaque entaille anodique **80'** et chaque entaille cathodique 7**0'** est commune à l'ensemble des lignes
**L₁** à **L_{y},** disposées les unes au-dessous des autres.

De la sorte, la fente 70,80 positionnée en ligne **Lₙ** est confondue avec au moins l'une des fentes adjacentes positionnée en ligne **Lₙ₋₁** et/ou **Lₙ₊₁.** Dans ce cas et comme illustré en figure 15, les deux lignes adjacentes ne sont pas séparées par des ponts de matières. Deux rangées adjacentes sont en revanche séparées par des ponts de matière **9** qui confèrent aux feuilles d'anode et de cathode une rigidité mécanique suffisante pour qu'elles puissent être manipulées aisément.

On suppose que l'empilement des feuilles d'anode et de cathode, décrit ci-dessus, est soumis à des étapes visant à assurer sa stabilité mécanique globale. Ces étapes, de type connu en soi, incluent notamment le traitement thermique et/ou la compression mécanique de l'empilement des différentes feuilles, comme cela a été décrit précédemment. Comme indiqué précédemment, cet empilement permet la formation de batteries individuelles, dont le nombre est égal au produit entre le nombre de lignes Y et le nombre de rangées X.

À cet effet, en référence à la figure 16, on a illustré trois lignes **Lₙ₋₁** à **Lₙ₊₁,** ainsi que trois rangées **Rₙ₋₁** à **Rₙ₊₁.** Conformément à l'invention, on réalise une première paire de découpes **DXₙ** et **DX'ₙ** par ligne. Chaque découpe, qui s'effectue de manière traversante, à savoir qu'elle s'étend sur l'ensemble de la hauteur de l'empilement, est réalisée de manière connue en soi, comme indiqué précédemment.

Les étapes ultérieures d'imprégnation, d'encapsulation, de découpes selon les lignes de découpes **DYₙ** et **DY'ₙ,** de dépôt des organes de contact sur au moins les zones de connexion anodique et cathodique sont, avantageusement, réalisées comme précédemment. Le fait d'utiliser des entailles **70',80'** selon la première variante à la place de fentes **70,80** permet de réduire les chutes de matière **90** et ainsi d'optimiser la production de batterie **1000** unitaire. La batterie **1000** obtenue selon la première variante de l'invention est en tout point identique à celle obtenue selon l'invention quand bien même l'agencement des entailles **70',80'** est différent.

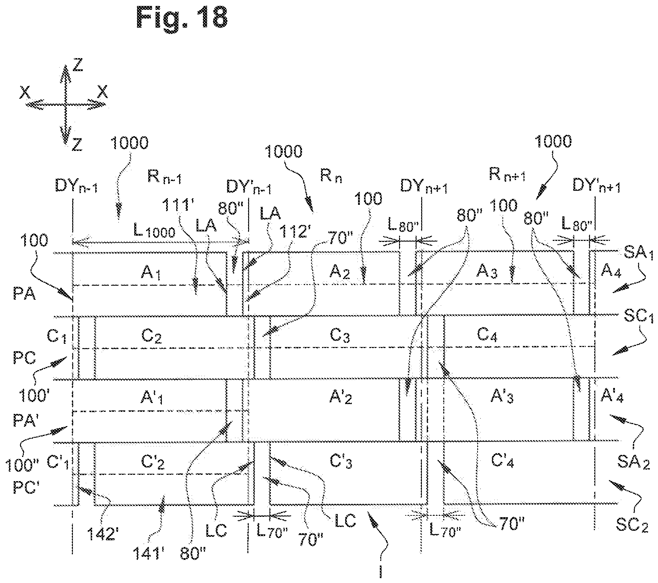

Les figures 17 et 18 illustrent un second mode de réalisation de l'invention de l'invention. La différence principale, entre ce second mode et le premier mode décrit ci-dessus, réside dans la conformation des strates de l'empilement. Comme on a vu ci-dessus, le premier mode fait appel à des strates formées chacune par des feuilles d'un seul tenant. En revanche, dans le second mode, chaque strate est formée par une succession de bandes, disposées les unes à côté des autres selon un plan respectivement anodique PA et cathodique PC, qui correspond au plan formé par une feuille du premier mode de réalisation.

Sur la figure 18, seules les quatre premières strates sont représentées, à savoir les deux premières strates anodiques SA, et SA₂, ainsi que les 2 premières strates cathodiques SC₁ et SC₂. Chaque strate anodique est formée par une succession de bandes anodiques A₁ à Ax et A'1 à A'x, dont seules les 4 premières A₁ à A₄ et A'₁ à A'₄ sont représentées sur les figures 17 et 18, alors que chaque strate cathodique est formée par une succession de bandes cathodiques C1 à Cx et C'1 à C'x, dont seules les 4 premières C₁ à C₄ et C'₁ à C'₄ sont représentées sur les figures. Pour chaque strate, aussi bien anodique et cathodique, le nombre de bandes correspond au nombre de rangées. Par ailleurs, pour chaque strate, les bords latéraux en regard LA et LC des bandes adjacentes définissent des espaces libres respectivement 80" et 70".

Ces bandes anodiques **A₁,A₂, A₃,A₄,** respectivement cathodiques **C₁,C₂,C₃,C₄,** ont, de préférence, une forme de quadrilatère, typiquement de type rectangulaire.

Ces bandes anodiques, respectivement cathodiques présentent la même structure chimique que les feuilles anodiques, respectivement cathodiques employées selon l'invention ou selon la première variante de l'invention.

Ce second mode de réalisation diffère par conséquent, en d'autres termes, du premier mode essentiellement en ce que les différentes bandes, respectivement anodique et cathodique, sont indépendantes les unes des autres.

De la sorte, chaque bande anodique **A₁,A₂, A₃,A₄,** respectivement cathodique **C₁,C₂,C₃,C₄** n'est pas reliée à un cadre périphérique plein de manière à former une feuille anodique, respectivement cathodique comme indiqué précédemment.

Selon le second mode de réalisation de l'invention, pour une rangée Rx donnée, la bande anodique **A₁,A₂, A₃,A₄** est commune à l'ensemble des lignes **L₁** à **L_{y},** disposées les unes au-dessous des autres, et la bande cathodique **C₁,C₂,C₃,C₄** est commune à l'ensemble des lignes **L₁** à **L_{y},** disposées les unes au-dessous des autres.

Selon le second mode de réalisation de l'invention et comme illustré en figure 18, les bandes anodiques **A₁,A₂, A₃,A₄,** alignées selon le plan anodique **PA** parallèle au plan principal de la batterie, les bandes cathodiques **C₁,C₂,C₃,C₄** alignées selon le plan cathodique **PC** parallèle au plan principal de la batterie, les espaces libres **80"** ménagés entre deux bandes anodiques voisines **A₁,A₂** selon une direction longitudinale et les espaces libres **70"** ménagés entre deux bandes cathodiques voisines **C₁,C₂** selon une direction longitudinale sont disposés de manière à ce que :
- chaque bande anodique **Aₙ** positionnée en rangée **Rₙ** soit en partie utilisée comme corps secondaire d'une batterie **1000** positionnée en rangée **Rₙ₋₁,** et en partie utilisée comme corps primaire d'une batterie **1000** positionnée en rangée **Rₙ,** et
- chaque bande cathodique **Cₙ₊₁** soit en partie utilisée comme corps secondaire d'une batterie **1000** positionnée en rangée **Rₙ₊₁,** et en partie utilisée comme corps primaire d'une batterie 1000 positionnée en rangée **Rₙ.**

On suppose que l'empilement des bandes anodique et cathodique, décrit ci-dessus, est soumis à des étapes visant à assurer sa stabilité mécanique globale. Ces étapes, de type connu en soi, incluent notamment le traitement thermique et/ou la compression mécanique de l'empilement des différentes bandes, comme cela a été décrit précédemment. Comme indiqué précédemment, cet empilement permet la formation de batteries individuelles, dont le nombre est égal au produit entre le nombre de lignes Y et le nombre de rangées X.

À cet effet, en référence à la figure 17, on a illustré trois lignes **Lₙ₋₁** à **Lₙ₊₁,** ainsi que trois rangées **Rₙ₋₁** à **Rₙ₊₁.** Conformément à l'invention, on réalise une première paire de découpes **DXₙ** et **DX'ₙ** par ligne. Chaque découpe, qui s'effectue de manière traversante, à savoir qu'elle s'étend sur l'ensemble de la hauteur de l'empilement, est réalisée de manière connue en soi, comme indiqué précédemment.

Les étapes ultérieures d'imprégnation, d'encapsulation, de découpes selon les lignes de découpes **DYₙ** et **DY'ₙ** comme illustré en figure 18, de dépôt des organes de contact sur au moins les zones de connexion anodique et cathodique sont, avantageusement, réalisées comme indiqué précédemment. Le fait d'utiliser des bandes anodiques **A₁,A₂, A₃,A₄** et cathodiques **C₁,C₂,C₃,C₄** selon la seconde variante permet de réduire les chutes de matière **90** et ainsi d'optimiser la production de batteries **1000** unitaires. La batterie **1000** obtenue selon le second mode de réalisationde l'invention est en tout point identique à celle obtenue selon le premier mode de réalisation à partir de feuilles présentant des zones vides de faible ou de grande dimension, quand bien même l'agencement des bandes anodiques **A₁,A₂, A₃,A₄** et cathodiques **C₁,C₂,C₃,C₄** est différent.

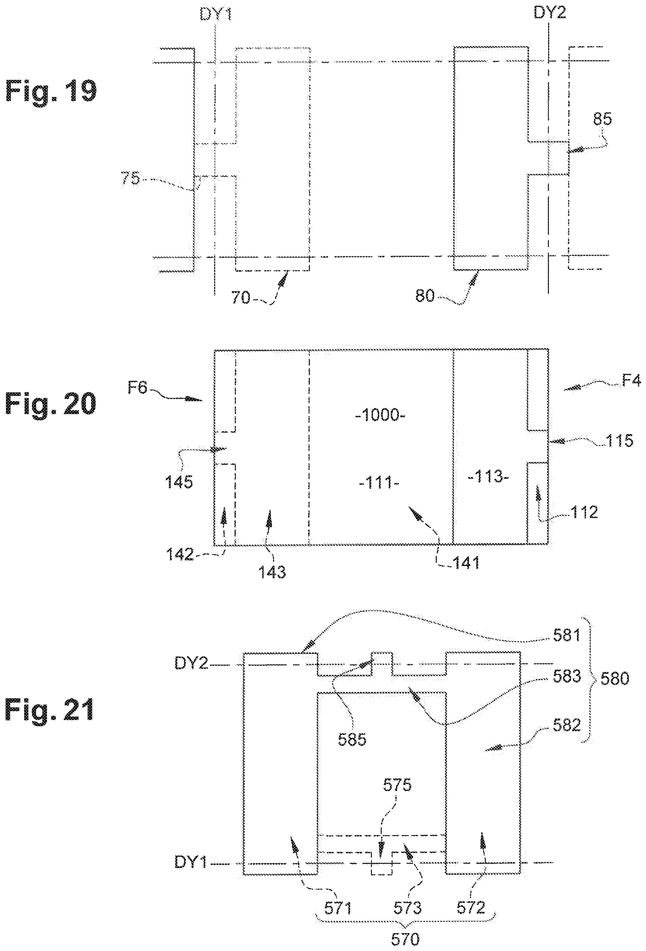

La figure 19 illustre une variante du mode de réalisation illustré à la figure 6. L'empilement de cette figure 19 diffère de celui décrit la figure 6, en ce que chaque zone vide 70,80 est prolongée par un canal respectif 75,85. Chaque canal s'étend transversalement à partir de la zone vide, au-delà de la ligne de découpe en regard DY1 ou DY2. De la sorte, ce canal peut être traversé lorsqu'on réalise cette découpe.

Différentes possibilités peuvent être envisagées, en ce qui concerne la structure de ces canaux. De façon typique, les canaux anodiques 85 sont mutuellement superposés, tout comme les canaux cathodiques 75. Par ailleurs chaque canal anodique est situé typiquement dans le prolongement d'un canal cathodique, étant entendu qu'on peut prévoir un agencement décalé. Par ailleurs on peut prévoir de réaliser, pour une même zone vide, plusieurs canaux anodiques et/ou plusieurs canaux cathodiques. Selon la direction Z, on peut prévoir que chaque canal s'étend sur toute la hauteur de la zone vide. À titre de variante, ce canal peut s'étendre sur uniquement une partie de cette hauteur, soit en partie supérieure, soit en partie inférieure, soit encore en partie médiane.

La présence de ces canaux, à la fois anodiques et cathodiques, apporte des avantages spécifiques. En effet ces canaux permettent, en particulier, de favoriser l'imprégnation de l'électrolyte.

La figure 20 illustre la batterie finale 1000, une fois réalisée selon le procédé mis en oeuvre grâce aux feuilles représentées de manière partielle sur la figure 19. Chaque batterie comporte des cavités anodiques 115 et cathodiques 145, s'étendant dans un corps secondaire 112 et 142 à partir d'un espace libre respectif 113 et 143. On notera que ces cavités, qui sont formées à partir des canaux ci-dessus, présentent cependant une longueur moindre. En effet, comme cela a été mentionné, les canaux s'étendent au-delà de la ligne de découpe. En revanche les cavités 115 et 145 s'étendent uniquement jusqu'aux faces longitudinales opposées F4 et F6 de la batterie, qui sont délimitées par ces découpes.

La figure 21 montre une variante supplémentaire de réalisation, qui n'entre pas dans le cadre de la présente invention. Cette variante est fondée notamment sur l'enseignement de la demande de brevet internationale WO 2020 136313 au nom de la demanderesse, dans laquelle les zones vides présentent une forme globale de H. Selon l'enseignement de ce document chaque zone vide, telle que celle 570 ou 580 de la figure 21, comporte deux évidements principaux 571 ou 581 ainsi que 572 ou 582, qui sont mutuellement reliés par un conduit de jonction 573 ou 583.

Selon la variante de la figure 21, on réalise des canaux 575 et 585, dont chacun prolonge un conduit respectif 573 et 583, en étant parallèle aux évidements principaux. Tout comme dans le mode de réalisation de la figure 19, chaque canal s'étend au-delà d'une ligne de découpe respective DY1 et DY2. L'effet technique associé est à rapprocher de celui du mode de réalisation des figures 19 à 20, à savoir que la présence du canal 575 ou 585 assure une meilleure imprégnation de l'électrolyte.

Le procédé selon l'invention est particulièrement adapté à la fabrication de batteries entièrement solides, i.e. de batteries dont les électrodes et l'électrolyte sont solides et ne comprennent pas de phase liquide, même imprégnées dans la phase solide.

Le procédé selon l'invention est particulièrement adapté à la fabrication de batteries considérées comme quasi-solides comprenant au moins un séparateur **31** imprégné d'un électrolyte. Le séparateur est, de préférence, une couche inorganique poreuse présentant :
- une porosité, de préférence, une porosité mésoporeuse, supérieure à 30%, de préférence comprise entre 35% et 50%, et encore plus préférentiellement entre 40 % et 50 %,
- des pores de diamètre moyen D₅₀ inférieur à 50 nm.

L'épaisseur du séparateur est avantageusement inférieure à 20 µm, et préférentiellement compris entre 5 µm et 10 µm, de manière à réduire l'épaisseur finale de la batterie sans amoindrir ses propriétés. Les pores du séparateur sont imprégnés par un électrolyte, de préférence, par une phase porteuse d'ions de lithium telle que des électrolytes liquides ou un liquide ionique contenant des sels de lithium. Le liquide « nanoconfiné » ou « nanopiégé » dans les porosités, et en particulier dans les mésoporosités, ne peut plus ressortir. Il est lié par un phénomène appelé ici « d'absorption dans la structure mésoporeuse » (qui ne semble pas avoir été décrit dans la littérature dans le contexte des batteries à ions de lithium) et il ne peut plus sortir même lorsque la cellule est mise sous vide. La batterie est alors considérée comme quasi-solide.

La batterie selon l'invention peut être conçue et dimensionnée de manière à avoir :
- une capacité inférieure ou égale à environ 1 mA h (appelée couramment « microbatterie »),
- ou bien une capacité supérieure à environ 1 mA h.

De manière typique, les microbatteries sont conçues de manière à être compatibles avec les procédés de fabrication de la microélectronique.

Les batteries de chacune de ces gammes de puissance peuvent être réalisées :
- soit avec des couches de type « tout solide », i.e. dépourvues de phases liquides ou pâteuses imprégnées (lesdites phases liquides ou pâteuses pouvant être un milieu conducteur d'ions de lithium, capable d'agir comme électrolyte),
- soit avec des couches de type « tout solide » mésoporeuses, imprégnées par une phase liquide ou pâteuse, typiquement un milieu conducteur d'ions de lithium, qui entre spontanément à l'intérieur de la couche et qui ne ressort plus de cette couche, de sorte que cette couche puisse être considérée comme quasi-solide,
- soit avec des couches poreuses imprégnées (i.e. couches présentant un réseau de pores ouverts qui peuvent être imprégnés avec une phase liquide ou pâteuse, et qui confère à ces couches des propriétés humides).

## Revendications

1. Procédé de fabrication d'au moins une batterie (1000), chaque batterie comprenant au moins une entité anodique (110) et au moins une entité cathodique (140), disposées l'une au-dessus de l'autre de manière alternée selon une direction frontale (ZZ) de la batterie (1000),
dans laquelle batterie, ladite entité anodique (110) comprend :
un substrat collecteur de courant anodique (10), au moins une couche d'anode (20), et
éventuellement une couche d'un matériau d'électrolyte (30) ou d'un séparateur (31) imprégné d'un électrolyte,
et dans laquelle batterie ladite entité cathodique (140) comprend
un substrat collecteur de courant cathodique (40), au moins une couche de cathode (50), et éventuellement une couche d'un matériau d'électrolyte (30) ou d'un séparateur (31) imprégné d'un électrolyte,
ladite batterie (1000) présentant six faces, à savoir
- deux faces dites frontales (F1, F2) mutuellement opposées, en particulier mutuellement parallèles, globalement parallèles à chaque entité anodique (110) et, à chaque entité cathodique (140),
- deux faces dites latérales (F3, F5) mutuellement opposées, en particulier mutuellement parallèles ; et
- deux faces dites longitudinales (F4, F6), mutuellement opposées, en particulier mutuellement parallèles,
étant entendu que la première face longitudinale (F6) de la batterie comprend au moins une zone de connexion anodique (1002) et qu'une seconde face longitudinale (F4) de la batterie comprend au moins une zone de connexion cathodique (1006), lesdites zones de connexion anodique (1002) et cathodique (1006) étant latéralement opposées,
- chaque entité anodique (110) et chaque entité cathodique (140) comprenant un corps primaire (111, 141) respectif, séparé d'un corps secondaire (112, 142) respectif, par un espace libre (113, 143) de tout matériau d'électrode et de substrat collecteur de courant ;
- lorsque la batterie comprend plusieurs espaces libres (113), selon ladite direction frontale (ZZ) de la batterie ;
- les espaces libres ménagés entre chaque corps primaire (111) et chaque corps secondaire (112) de chaque entité anodique (110) sont superposés ;
- les espaces libres ménagés entre chaque corps primaire (141) et chaque corps secondaire (142) de chaque entité cathodique (140) sont superposés ; et
- les espaces libres de chaque entité anodique (110) et de chaque entité cathodique (140) ne sont pas confondus ;
ledit procédé de fabrication comprenant :
a) la réalisation d'un empilement (I) comprenant, en vue de dessus, x rangées avec x strictement supérieur à 1 ainsi que y ligne(s) avec y supérieur ou égal à 1, de manière à former un nombre (x*y) de batteries
cet empilement étant formé par une succession alternée de strates (SA, SC) respectivement cathodique (SC) et anodique (SA), chaque strate cathodique (SC) étant destinée à former un nombre (x*y) d'entités cathodiques (140) alors que chaque strate anodique (SA) est destinée à former un nombre (x*y) d'entités anodiques (110),
chaque strate (SA, SC) comprenant une pluralité d'ébauches primaires (111', 141'), respectivement anodique (111') et cathodique (141') , dont chacune est destinée à former un corps primaire (111, 141) respectif, une pluralité d'ébauches secondaires (112', 142'), respectivement anodique (112') et cathodique (142'), dont chacune est destinée à former un corps secondaire (112, 142) respectif, l'ébauche primaire (111', 141') et l'ébauche secondaire (112', 142') étant mutuellement séparées par une zone dite vide (80", 70"), laquelle est destinée à former au moins un desdits espaces libres (113, 143),et lorsque la batterie comprend plusieurs espaces libres (113), selon la direction frontale (ZZ) de la batterie ;
- les zones vides (80") des différentes strates anodiques (SA) sont superposées ;
- les zones vides (70") des différentes strates cathodiques (SC) sont superposées ; et
- les zones vides (80", 70") de chaque strate anodique (SA) et de chaque strate cathodique (SC) ne sont pas confondues,
b) la réalisation d'un traitement thermique et/ou d'une compression mécanique de l'empilement (I) obtenu à l'étape a) de manière à former un empilement consolidé ;
c) la réalisation d'une paire de découpes principales (DYn, DY'n) entre deux zones vides adjacentes (80", 70"), en vue de dessus, de manière à mettre à nu la zone de connexion anodique (1002) et la zone de connexion cathodique (1006), et à séparer une batterie donnée, formée à partir d'une rangée donnée (Rₙ), vis-à-vis d'au moins une autre batterie adjacente, formée à partir d'au moins une rangée adjacente (Rₙ₊₁)

2. Procédé selon la revendication 1, **caractérisé en ce que** chaque strate (SA, SC) est formée par une feuille d'un seul tenant, les zones vides correspondant en particulier à des chutes de matière dans la feuille (70, 80, 70', 80').

3. Procédé selon la revendication 1, **caractérisé en ce que** chaque strate (SA, SC) est formée par une pluralité de bandes indépendantes (A₁, A₂, Aₙ, C₁, C₂, Cₙ), les zones vides (113', 143') étant définies entre les bords (LA, LC) en regard des bandes adjacentes.

4. Procédé selon l'une des revendications précédentes, **caractérisé en ce qu'**on réalise des zones vides dites de faible dimension (80,70) appelées fentes, chaque zone vide, dite de faible dimension, est destinée à former un unique espace libre.

5. Procédé selon l'une des revendications 1 à 3, **caractérisé en ce qu'**on réalise des zones vides dites de grande dimension (80',70') appelées entailles, chaque zone vide de grande dimension étant destinées à former une pluralité d'espaces libres dans une même rangée, en particulier l'ensemble des espaces libres de ladite même rangée (Rₙ).

6. Procédé selon l'une des revendications précédentes, **caractérisé en ce que** les zones vides (70, 70', 80', 80') présentent une forme rectangulaire, notamment une forme de I.

7. Procédé selon l'une quelconque des revendications précédentes, **caractérisé en ce qu'**on réalise après l'étape b), lors d'une étape d), une paire de découpes accessoires (DXn, DX'n) permettant de séparer une ligne (Lₙ) donnée vis-à-vis d'au moins une ligne adjacente (Lₙ₋₁, Lₙ₊₁) appartenant audit empilement consolidé.

8. Procédé selon l'une quelconque des revendications précédentes, **caractérisé en ce qu'**on réalise lors d'une étape e), l'imprégnation de l'empilement consolidé obtenu à l'étape b) ou l'imprégnation de la ligne (Lₙ) de batteries (1000) obtenue à l'étape d) lorsque l'étape d) est réalisée, par une phase porteuse d'ions de lithium telle que des électrolytes liquides ou un liquide ionique contenant des sels de lithium, de sorte que ladite couche de séparateur (31) soit imprégnée par un électrolyte ;

9. Procédé selon l'une quelconque des revendications précédentes, **caractérisé en ce qu'**on réalise, avant l'étape c) et après l'étape e) si cette dernière est réalisée ou bien, si l'étape e) n'est pas réalisée, après l'étape d) si l'étape d) est réalisée ou bien, si les étapes e) et d) ne sont pas réalisées, après l'étape b),
une étape f) d'encapsulation de l'empilement consolidé ou de la ligne (Lₙ) de batteries (1000), de préférence, dans laquelle on recouvre, par un système d'encapsulation (95), la périphérie extérieure de l'empilement (I) ou de la ligne (Lₙ) de batteries (1000), de préférence, les faces frontales de l'empilement (F1, F2) ou de la ligne (Lₙ) de batteries (FF1, FF2), les faces latérales (F3, F5, FF3, FF5) et les faces longitudinales (F4, F6, FF4, FF6) de l'empilement (I) ou de la ligne (Lₙ) de batteries (1000),
ledit système d'encapsulation (95) comprenant, de préférence,
- optionnellement, au moins une première couche de recouvrement, de préférence choisie parmi le parylène, le parylène de type F, le polyimide, les résines époxy, le silicone, le polyamide, la silice sol-gel, la silice organique et/ou un mélange de ceux-ci, déposée sur la périphérie extérieure de l'empilement (I) ou de la ligne (Lₙ) de batteries (1000),
- optionnellement une deuxième couche de recouvrement composée d'une matière électriquement isolante déposée par dépôt de couches atomiques, sur la périphérie extérieure de l'empilement (I) ou sur la périphérie extérieure de la ligne (Lₙ) de batteries (1000) ou sur la première couche de recouvrement, et
- au moins une troisième couche de recouvrement étanche, de préférence ayant une perméance à la vapeur d'eau (WVTR) inférieure à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée sur la périphérie extérieure de l'empilement (I) ou sur la périphérie extérieure de la ligne (Lₙ) de batteries (1000), ou de la première couche de recouvrement,
étant entendu qu'une séquence d'au moins une deuxième couche de recouvrement et d'au moins une troisième couche de recouvrement peut être répétée z fois avec z ≥ 1 et déposée à la périphérie externe d'au moins la troisième couche de recouvrement, et que la dernière couche du système d'encapsulation est une couche de recouvrement étanche, de préférence ayant une perméance à la vapeur d'eau (WVTR) inférieure à 10⁻⁵ g/m².d et étant composée d'un matériau céramique et/ou d'un verre à bas point de fusion.

10. Procédé selon l'une quelconque des revendications précédentes, **caractérisé en ce qu'**après l'étape c), on réalise une étape g) dans laquelle on recouvre au moins la zone de connexion anodique (1002), de préférence au moins la première face longitudinale (F6) comprenant au moins la zone de connexion anodique (1002), par un organe de contact anodique (97'), apte à assurer le contact électrique entre l'empilement (I) et un élément conducteur externe,
et **en ce qu'**on recouvre au moins la zone de connexion cathodique (1006), de préférence au moins la seconde face longitudinale (F4) comprenant au moins la zone de connexion cathodique (1006), par un organe de contact cathodique (97"), apte à assurer le contact électrique entre l'empilement (I) et un élément conducteur externe,
l'étape (i) comprenant :
- le dépôt sur au moins la zone de connexion anodique (1002) et sur au moins la zone de connexion cathodique (1006), de préférence, sur au moins la première face longitudinale (F6) comprenant au moins la zone de connexion anodique (1002), et sur au moins la seconde face longitudinale (F4) comprenant au moins la zone de connexion cathodique (1006), d'une première couche de connexion électrique de matériau chargé en particules électriquement conductrices, ladite première couche étant de préférence formée de résine polymérique et/ou d'un matériau obtenu par un procédé sol-gel chargé en particules électriquement conductrices ;
- optionnellement, lorsque ladite première couche est formée de résine polymérique et/ou d'un matériau obtenu par un procédé sol-gel chargé en particules électriquement conductrices, une étape de séchage suivie d'une étape de polymérisation de ladite résine polymérique et/ou dudit matériau obtenu par un procédé sol-gel ; et
- le dépôt, sur la première couche, d'une deuxième couche de connexion électrique comprenant une feuille métallique disposée sur la première couche de connexion électrique.
- optionnellement, le dépôt sur la deuxième couche de connexion électrique, d'une troisième couche de connexion électrique comprenant une encre conductrice.

11. Procédé selon l'une quelconque des revendications précédentes, **caractérisé en ce qu'**on ménage au moins un canal transversal (75,85) à partir d'au moins une zone vide (70,80), notamment à partir de chacune parmi une majorité de zones vides, en particulier de chacune parmi l'ensemble des zones vides, ledit canal transversal s'étendant au moins jusqu'à une découpe principale adjacente (DY1, DY2), de manière à faciliter l'imprégnation par l'électrolyte.

12. Batterie (1000) comprenant au moins une entité anodique (110) et au moins une entité cathodique (140), disposée l'une au-dessus de l'autre de manière alternée selon une direction frontale (ZZ) au plan principal de la batterie (1000), formant un empilement (I), dans laquelle ladite entité anodique (110) comprend : un substrat collecteur de courant anodique (10), au moins une couche d'anode (20), et éventuellement une couche d'un matériau d'électrolyte (30) ou d'un séparateur (31) imprégné d'un électrolyte,
et dans laquelle ladite entité cathodique (140) comprend : un substrat collecteur de courant cathodique (40), au moins une couche de cathode (50), et éventuellement une couche d'un matériau d'électrolyte (30) ou d'un séparateur (31) imprégné d'un électrolyte ;
ladite batterie (1000) présentant six faces, à savoir
- deux faces dites frontales (F1, F2) mutuellement opposées, en particulier mutuellement parallèles, globalement parallèles à chaque entité anodique (110), à chaque entité cathodique (140), au(x) substrat(s) collecteur de courant anodique (10), au(x) couche(s) d'anode (20), au(x) couche(s) d'un matériau d'électrolyte (30) ou au(x) couche(s) de séparateur imprégné d'un électrolyte (31), au(x) couche(s) de cathode (50), et au(x) substrat(s) collecteur de courant cathodique (40),
- deux faces dites latérales (F3, F5) mutuellement opposées, en particulier mutuellement parallèles,
- et deux faces dites longitudinales (F4, F6), mutuellement opposées, en particulier mutuellement parallèles,
étant entendu que la première face longitudinale (F6) de la batterie comprend au moins une zone de connexion anodique (1002) et qu'une seconde face longitudinale (F4) de la batterie comprend au moins une zone de connexion cathodique (1006), lesdites zones de connexion anodique (1002) et cathodique (1006) étant latéralement opposées,
de sorte que :
- chaque entité anodique (110) et chaque entité cathodique (140) comprend un corps primaire (111, 141) respectif, séparé d'un corps secondaire (112, 142) respectif, par un espace libre (113, 143) de tout matériau d'électrode et de substrat collecteur de courant,
- lorsque la batterie comprend plusieurs espaces libres (113), selon une direction frontale (ZZ) au plan principal de la batterie,
> les espaces libres ménagés entre chaque corps primaire (111) et chaque corps secondaire (112) de chaque entité anodique (110) sont superposés,
> les espaces libres ménagés entre chaque corps primaire (141) et chaque corps secondaire (142) de chaque entité cathodique (140) sont superposés, et
> les espaces libres de chaque entité anodique (110) et de chaque entité cathodique (140) ne sont pas confondus.
**caractérisée en ce que** la batterie comprend un système d'encapsulation recouvrant au moins en partie la périphérie extérieure de l'empilement (I), ledit système d'encapsulation (95) recouvrant les faces frontales de l'empilement (F1, F2), les faces latérales (F3, F5) et au moins en partie les faces longitudinales (F4, F6) de sorte que
seules les zones de connexion anodique (1002) et cathodique (1006),
de préférence, la première face longitudinale (F6) comprenant au moins la zone de connexion anodique (1002), et la seconde face longitudinale (F4) comprenant au moins la zone de connexion cathodique (1006),
ne sont pas recouvertes dudit système d'encapsulation (95), ledit système d'encapsulation (95) comprenant :
- optionnellement, une première couche de recouvrement, de préférence choisie parmi le parylène, le parylène de type F, le polyimide, les résines époxy, le silicone, le polyamide, la silice sol-gel, la silice organique et/ou un mélange de ceux-ci, déposée sur au moins en partie la périphérie extérieure de l'empilement (I),
- optionnellement une deuxième couche de recouvrement composée d'une matière électriquement isolante déposée par dépôt de couches atomiques, sur au moins en partie la périphérie extérieure de l'empilement (I), ou sur la première couche de recouvrement,
- au moins une troisième couche de recouvrement étanche, de préférence ayant une perméance à la vapeur d'eau (WVTR) inférieure à 10⁻⁵ g/m².d, cette troisième couche de recouvrement étant composée d'un matériau céramique et/ou d'un verre à bas point de fusion, de préférence d'un verre dont le point de fusion est inférieur à 600°C, déposée sur au moins en partie la périphérie extérieure de l'empilement (I), ou sur la première couche de recouvrement,
étant entendu que lorsque ladite deuxième couche de recouvrement est présente,
une succession de ladite deuxième couche de recouvrement et de ladite troisième couche de recouvrement peut être répétée z fois avec z ≥ 1 et déposée à la périphérie externe d'au moins la troisième couche de recouvrement,
la dernière couche du système d'encapsulation étant une couche de recouvrement étanche, de préférence ayant une perméance à la vapeur d'eau (WVTR) inférieure à 10⁻⁵ g/m².d et étant composée d'un matériau céramique et/ou d'un verre à bas point de fusion.

13. Batterie selon la revendication 12, **caractérisée en ce qu'**au moins la zone de connexion anodique (1002), de préférence la première face longitudinale (F6) comprenant au moins la zone de connexion anodique (1002), est recouverte par un organe de contact anodique (97'),
et **en ce qu'**au moins la zone de connexion cathodique (1006), de préférence la seconde face longitudinale (F4) comprenant au moins la zone de connexion cathodique (1006), est recouverte par un organe de contact cathodique (97"),
étant entendu que lesdits organes de contact anodique (97') et cathodique (97") sont apte à assurer le contact électrique entre l'empilement (I) et un élément conducteur externe.

14. Batterie selon la revendication précédente, **caractérisée** en ce chacun des organes de contact anodique (97') et cathodique (97") comprend :
- une première couche de connexion électrique, disposée sur au moins la zone de connexion anodique (1002) et au moins la zone de connexion cathodique (1006), de préférence sur la première face longitudinale (F6) comprenant au moins la zone de connexion cathodique (1002) et sur la seconde face longitudinale (F4) comprenant au moins la zone de connexion cathodique (1006),
cette première couche comprenant un matériau chargé en particules électriquement conductrices, de préférence une résine polymérique et/ou un matériau obtenu par un procédé sol-gel, chargé en particules électriquement conductrices et encore plus préférentiellement une résine polymérique chargée en graphite, et
- une deuxième couche de connexion électrique comprenant une feuille métallique disposée sur la première couche de matériau chargé en particules électriquement conductrices.

15. Batterie selon l'une quelconque des revendications 12 à 14, **caractérisée en ce qu'**au moins un espace libre (113,143), notamment une majorité des espaces libres, en particulier l'ensemble des espaces libres, est prolongé par une cavité (115,145) destinée à faciliter l'imprégnation par l'électrolyte, ladite cavité s'étendant à travers le corps secondaire (112,142) jusqu'à une face longitudinale (F4, F6) en regard.

## Patentansprüche

1. Verfahren zur Herstellung mindestens einer Batterie (1000), wobei jede Batterie mindestens eine Anodeneinheit (110) und mindestens eine Kathodeneinheit (140) umfasst, die abwechselnd gemäß einer frontalen Richtung (ZZ) der Batterie (1000) übereinander angeordnet sind,
wobei die Batterie, die Anodeneinheit (110) umfasst:
ein Anodenstromkollektorsubstrat (10), mindestens eine Anodenschicht (20) und
gegebenenfalls eine Schicht aus einem Elektrolytmaterial (30) oder einem Separator (31), der mit einem Elektrolyten imprägniert ist,
und wobei die Batterie, die Kathodeneinheit (140) umfasst:
ein Kathodenstromkollektorsubstrat (40), mindestens eine Kathodenschicht (50) und gegebenenfalls eine Schicht aus einem Elektrolytmaterial (30) oder einem Separator (31), der mit einem Elektrolyten imprägniert ist,
wobei die Batterie (1000) sechs Flächen aufweist, nämlich
- zwei sogenannte Frontflächen (F1, F2), die einander gegenüberliegen, insbesondere zueinander parallel, insgesamt parallel zu jeder Anodeneinheit (110) und zu jeder Kathodeneinheit (140) sind,
- zwei sogenannte Seitenflächen (F3, F5), die einander gegenüberliegen, insbesondere zueinander parallel sind; und
- zwei sogenannte Längsflächen (F4, F6), die einander gegenüberliegen und insbesondere zueinander parallel sind,
mit der Maßgabe, dass die erste Längsfläche (F6) der Batterie mindestens einen Anodenverbindungsbereich (1002) umfasst und dass eine zweite Längsfläche (F4) der Batterie mindestens einen Kathodenverbindungsbereich (1006) umfasst, wobei der Anoden- (1002) und Kathodenverbindungsbereich (1006) seitlich gegenüberliegen,
- wobei jede Anodeneinheit (110) und jede Kathodeneinheit (140) einen jeweiligen Primärkörper (111, 141) umfasst, der von einem jeweiligen Sekundärkörper (112, 142) durch einen Raum (113, 143) frei von jeglichem Elektrodenmaterial und Stromkollektorsubstrat getrennt ist;
- wenn die Batterie mehrere Freiräume (113) umfasst, gemäß der frontalen Richtung (ZZ) der Batterie;
- die Freiräume zwischen jedem Primärkörper (111) und jedem Sekundärkörper (112) jeder Anodeneinheit (110) übereinander liegen;
- die Freiräume zwischen jedem Primärkörper (141) und jedem Sekundärkörper (142) jeder Kathodeneinheit (140) übereinander liegen; und
- die Freiräume jeder Anodeneinheit (110) und jeder Kathodeneinheit (140) nicht zusammenfallen;
wobei das Herstellungsverfahren umfasst:
a) das Herstellen eines Stapels (I), der in der Draufsicht x Reihen mit x strikt größer als 1 sowie y Zeilen mit y größer oder gleich 1 umfasst, so dass eine Anzahl (x*y) von Batterien gebildet wird,
wobei dieser Stapel durch eine abwechselnde Abfolge von Kathoden- (SC) bzw. Anoden-(SA) Lagen (SA, SC) gebildet wird, wobei jede Kathodenlage (SC) dazu bestimmt ist, eine Anzahl (x*y) von Kathodeneinheiten (140) zu bilden, während jede Anodenlage (SA) dazu bestimmt ist, eine Anzahl (x*y) von Anodeneinheiten (110) zu bilden,
wobei jede Lage (SA, SC) eine Vielzahl von Primärrohlingen (111', 141'), jeweils anodisch (111') und kathodisch (141'), umfasst, von denen jeder dazu bestimmt ist, einen jeweiligen Primärkörper (111, 141) zu bilden, eine Vielzahl von Sekundärrohlingen (112', 142'), jeweils anodisch (112') und kathodisch (142'), von denen jeder dazu bestimmt ist, einen jeweiligen Sekundärkörper (112, 142) zu bilden, wobei der Primärrohling (111', 141') und der Sekundärrohling (112', 142') voneinander durch einen sogenannten leeren Bereich (80", 70") getrennt sind, der dazu bestimmt ist, mindestens einen der Freiräume (113, 143) zu bilden, und wenn die Batterie gemäß der frontalen Richtung (ZZ) der Batterie mehrere Freiräume (113) umfasst;
- die leeren Bereiche (80") der verschiedenen Anodenlage (SA) übereinanderliegen;
- die leeren Bereiche (70") der verschiedenen Kathodenlagen (SC) übereinander liegen; und
- die leeren Bereiche (80", 70") jeder Anodenlage (SA) und jeder Kathodenlage (SC) nicht zusammenfallen,
b) das Durchführen einer Wärmebehandlung und/oder einer mechanischen Kompression des in Schritt a) erhaltenen Stapels (I), um einen konsolidierten Stapel zu bilden;
c) das Durchführen eines Paars von Haupteinschnitten (DYn, DY'n) zwischen zwei in der Draufsicht benachbarten leeren Bereichen (80", 70"), um den Anodenverbindungsbereich (1002) und den Kathodenverbindungsbereich (1006) freizulegen und eine gegebene Batterie, die aus einer gegebenen Reihe (Rₙ) gebildet ist, gegenüber mindestens einer anderen benachbarten Batterie, die aus mindestens einer benachbarten Reihe (Rₙ₊₁) gebildet ist, zu trennen.

2. Verfahren nach Anspruch 1, **dadurch gekennzeichnet, dass** jede Lage (SA, SC) von einer einteiligen Folie gebildet wird, wobei die leeren Bereiche insbesondere Materialabfällen der Folie (70, 80, 70', 80') entsprechen.

3. Verfahren nach Anspruch 1, **dadurch gekennzeichnet, dass** jede Lage (SA, SC) von einer Vielzahl von unabhängigen Streifen (A₁, A₂, Aₙ, C₁ , C₂ , Cₙ) gebildet wird, wobei die leeren Bereiche (113', 143') zwischen den Rändern (LA, LC) definiert sind, die den benachbarten Streifen zugewandt sind.

4. Verfahren nach einem der vorhergehenden Ansprüche, **dadurch gekennzeichnet, dass** sogenannte kleindimensionierte leere Bereiche (80, 70), Schlitze genannt, hergestellt werden, wobei jeder leere Bereich, kleindimensionierter Bereich genannt, dazu bestimmt ist, einen einzigen Freiraum zu bilden.

5. Verfahren nach einem der Ansprüche 1 bis 3, **dadurch gekennzeichnet, dass** sogenannte großdimensionierte leere Bereiche (80', 70'), Ausnehmungen genannt, hergestellt werden, wobei jeder großdimensionierte leere Bereich dazu bestimmt ist, eine Vielzahl von Freiräumen in einer gleichen Reihe, insbesondere die Gesamtheit der Freiräume dieser gleichen Reihe (Rₙ), zu bilden.

6. Verfahren nach einem der vorhergehenden Ansprüche, **dadurch gekennzeichnet, dass** die leeren Bereiche (70, 70', 80', 80') eine rechteckige Form, insbesondere eine I-Form, aufweisen.

7. Verfahren nach einem der vorhergehenden Ansprüche, **dadurch gekennzeichnet, dass** nach Schritt b) in einem Schritt d) ein Paar Hilfseinschnitte (DXn, DX'n) durchgeführt werden, die es gestatten, eine gegebene Zeile (Lₙ) gegenüber mindestens einer benachbarten Zeile (Lₙ₋₁, Lₙ₊₁), die zu dem konsolidierten Stapel gehört, zu trennen.

8. Verfahren nach einem der vorhergehenden Ansprüche, **dadurch gekennzeichnet, dass** in einem Schritt e) die Imprägnierung des in Schritt b) erhaltenen konsolidierten Stapels oder die Imprägnierung der in Schritt d) erhaltenen Zeile (Lₙ) von Batterien (1000), wenn Schritt d) durchgeführt wird, durch eine Lithiumionen-tragende Phase wie flüssige Elektrolyten oder eine ionische Flüssigkeit, die Lithiumsalze enthält, durchgeführt wird, so dass die Separatorschicht (31) mit einem Elektrolyten imprägniert wird.

9. Verfahren nach einem der vorhergehenden Ansprüche, **dadurch gekennzeichnet, dass** vor Schritt c) und nach Schritt e), wenn dieser durchgeführt wird, oder, wenn Schritt e) nicht durchgeführt wird, nach Schritt d), wenn Schritt d) durchgeführt wird, oder, wenn die Schritte e) und d) nicht durchgeführt werden, nach Schritt b) durchgeführt wird,
ein Schritt f) des Verkapselns des konsolidierten Stapels oder der Zeile (Lₙ) von Batterien (1000), vorzugsweise, wobei der Außenumfang des Stapels (I) oder der Zeile (Lₙ) von Batterien (1000) mit einem Verkapselungssystem (95) bedeckt wird, vorzugsweise die Frontflächen des Stapels (F1, F2) oder der Zeile (Lₙ) von Batterien (FF1, FF2), die Seitenflächen (F3, F5, FF3, FF5) und die Längsflächen (F4, F6, FF4, FF6) des Stapels (I) oder der Zeile (Lₙ) von Batterien (1000),
wobei das Verkapselungssystem (95) vorzugsweise umfasst:
- optional mindestens eine erste Deckschicht, vorzugsweise ausgewählt aus Parylen, F-Typ-Parylen, Polyimid, Epoxidharzen, Silikon, Polyamid, Sol-Gel-Kieselsäure, organischer Kieselsäure und/oder einer Mischung davon, die auf den Außenumfang des Stapels (I) oder auf der Zeile (Lₙ) von Batterien (1000) aufgebracht wird,
- optional eine zweite Deckschicht aus einem elektrisch isolierenden Material, das durch Abscheidung von Atomschichten auf den Außenumfang des Stapels (I) oder auf den Außenumfang der Zeile (Lₙ) von Batterien (1000) oder auf die erste Deckschicht aufgebracht wird, und
- mindestens eine dichte dritte Deckschicht, vorzugsweise mit einer Wasserdampfdurchlässigkeit (WVTR) von weniger als 10⁻⁵ g/m².d, wobei diese dritte Deckschicht aus einem Keramikmaterial und/oder einem Glas mit niedrigem Schmelzpunkt, vorzugsweise einem Glas mit einem Schmelzpunkt von unter 600 °C, zusammengesetzt ist, die auf den Außenumfang des Stapels (I) oder auf den Außenumfang der Zeile (Lₙ) von Batterien (1000) oder auf die erste Deckschicht aufgebracht wird,
mit der Maßgabe, dass eine Abfolge von mindestens einer zweiten Deckschicht und mindestens einer dritten Deckschicht z-mal mit z ≥ 1 wiederholt und am Außenumfang mindestens der dritten Deckschicht aufgebracht werden kann, und dass die letzte Schicht des Verkapselungssystems eine dichte Deckschicht ist, die vorzugsweise eine Wasserdampfdurchlässigkeit (WVTR) von weniger als 10⁻⁵ g/m².d aufweist und aus einem keramischen Material und/oder einem Glas mit einem niedrigen Schmelzpunkt zusammengesetzt ist.

10. Verfahren nach einem der vorhergehenden Ansprüche, **dadurch gekennzeichnet, dass** nach Schritt c) ein Schritt g) durchgeführt wird, bei dem mindestens der Anodenverbindungsbereich (1002), vorzugsweise mindestens die erste Längsfläche (F6), die mindestens den Anodenverbindungsbereich (1002) umfasst, mit einem anodischen Kontaktorgan (97') bedeckt wird, das geeignet ist, den elektrischen Kontakt zwischen dem Stapel (I) und einem äußeren leitenden Element zu gewährleisten,
und dass mindestens der Kathodenverbindungsbereich (1006), vorzugsweise mindestens die zweite Längsfläche (F4), die mindestens den Kathodenverbindungsbereich (1006) umfasst, mit einem kathodischen Kontaktorgan (97") bedeckt wird, das geeignet ist, den elektrischen Kontakt zwischen dem Stapel (I) und einem äußeren leitenden Element zu gewährleisten,
wobei Schritt (i) umfasst:
- das Aufbringen auf mindestens den Anodenverbindungsbereich (1002) und auf mindestens den Kathodenverbindungsbereich (1006), vorzugsweise auf mindestens der ersten Längsfläche (F6), die mindestens den Anodenverbindungsbereich (1002) umfasst, und auf mindestens der zweiten Längsfläche (F4), die mindestens den Kathodenverbindungsbereich (1006) umfasst, einer ersten elektrischen Verbindungsschicht aus einem mit elektrisch leitenden Partikeln beladenen Material, wobei die erste Schicht vorzugsweise aus einem Polymerharz und/oder einem durch ein Sol-Gel-Verfahren erhaltenen Material, das mit elektrisch leitenden Partikeln beladen ist, gebildet ist;
- optional, wenn die erste Schicht aus einem Polymerharz und/oder einem durch ein Sol-Gel-Verfahren erhaltenen Material, das mit elektrisch leitenden Partikeln beladen ist, gebildet ist, einen Trocknungsschritt, gefolgt von einem Polymerisationsschritt des Polymerharzes und/oder des durch ein Sol-Gel-Verfahren erhaltenen Materials; und
- das Aufbringen einer zweiten elektrischen Verbindungsschicht auf die erste Schicht, die eine Metallfolie umfasst, die auf der ersten elektrischen Verbindungsschicht angeordnet ist,
- optional das Aufbringen einer dritten elektrischen Verbindungsschicht, die eine leitende Tinte umfasst, auf die zweite elektrische Verbindungsschicht.

11. Verfahren nach einem der vorhergehenden Ansprüche, **dadurch gekennzeichnet, dass** mindestens ein Querkanal (75, 85) ausgehend von mindestens einem leeren Bereich (70, 80), insbesondere ausgehend von jedem von einer Vielzahl von leeren Bereichen, insbesondere von jedem aller leeren Bereiche, eingerichtet wird, wobei sich der Querkanal mindestens bis zu einem benachbarten Haupteinschnitt (DY1, DY2) erstreckt, um die Imprägnierung durch den Elektrolyten zu erleichtern.

12. Batterie (1000), umfassend mindestens eine Anodeneinheit (110) und mindestens eine Kathodeneinheit (140), die abwechselnd gemäß einer frontalen Richtung (ZZ) zur Hauptebene der Batterie (1000) übereinander angeordnet sind und einen Stapel (I) bilden, wobei die Anodeneinheit (110) umfasst: ein Anodenstromkollektorsubstrat (10), mindestens eine Anodenschicht (20) und gegebenenfalls eine Schicht aus einem Elektrolytmaterial (30) oder einem Separator (31), der mit einem Elektrolyten imprägniert ist,
und wobei die Kathodeneinheit (140) umfasst: ein Kathodenstromkollektorsubstrat (40), mindestens eine Kathodenschicht (50) und gegebenenfalls eine Schicht aus einem Elektrolytmaterial (30) oder einem Separator (31), der mit einem Elektrolyten imprägniert ist,
wobei die Batterie (1000) sechs Flächen aufweist, nämlich
- zwei sogenannte Frontflächen (F1, F2), die einander gegenüberliegen, insbesondere zueinander parallel, insgesamt parallel zu jeder Anodeneinheit (110) und zu jeder Kathodeneinheit (140), zu dem/den Anodenstromkollektorsubstrat(en) (10), zu der/den Anodenschicht(en) (20), zu der/den Schicht(en) aus einem Elektrolytmaterial (30) oder zu der/den Schicht(en) aus elektrolytgetränktem Separator (31), zu der/den Kathodenschicht(en) (50) und zu dem/den Kathodenstromkollektorsubstrat(en) (40) sind,
- zwei sogenannte Seitenflächen (F3, F5), die einander gegenüberliegen, insbesondere zueinander parallel sind;
- und zwei sogenannte Längsflächen (F4, F6), die einander gegenüberliegen und insbesondere zueinander parallel sind,
mit der Maßgabe, dass die erste Längsfläche (F6) der Batterie mindestens einen Anodenverbindungsbereich (1002) umfasst und dass eine zweite Längsfläche (F4) der Batterie mindestens einen Kathodenverbindungsbereich (1006) umfasst, wobei der Anoden- (1002) und Kathodenverbindungsbereich (1006) seitlich gegenüberliegen,
so dass:
- jede Anodeneinheit (110) und jede Kathodeneinheit (140) einen jeweiligen Primärkörper (111, 141) umfasst, der von einem jeweiligen Sekundärkörper (112, 142) durch einen Raum (113, 143) frei von jeglichem Elektrodenmaterial und Stromkollektorsubstrat getrennt ist;
- wenn die Batterie gemäß der frontalen Richtung (ZZ) zur Hauptebene der Batterie mehrere Freiräume (113) umfasst:
> die Freiräume zwischen jedem Primärkörper (111) und jedem Sekundärkörper (112) jeder Anodeneinheit (110) übereinander liegen,
> die Freiräume zwischen jedem Primärkörper (141) und jedem Sekundärkörper (142) jeder Kathodeneinheit (140) übereinander liegen, und
> die Freiräume jeder Anodeneinheit (110) und jeder Kathodeneinheit (140) nicht zusammenfallen,
**dadurch gekennzeichnet, dass** die Batterie ein Verkapselungssystem umfasst, das zumindest teilweise den Außenumfang des Stapels (I) bedeckt, wobei das Verkapselungssystem (95) die Frontflächen des Stapels (F1, F2), die Seitenflächen (F3, F5) und zumindest teilweise die Längsflächen (F4, F6) bedeckt, so dass
nur die Anoden- (1002) und Kathodenverbindungsbereiche (1006),
vorzugsweise die erste Längsfläche (F6), die mindestens den Anodenverbindungsbereich (1002) umfasst, und die zweite Längsfläche (F4), die mindestens den Kathodenverbindungsbereich (1006) umfasst,
nicht von dem Verkapselungssystem (95) bedeckt sind, wobei das Verkapselungssystem (95) umfasst:
- optional eine erste Deckschicht, vorzugsweise ausgewählt aus Parylen, F-Typ-Parylen, Polyimid, Epoxidharzen, Silikon, Polyamid, Sol-Gel-Kieselsäure, organischer Kieselsäure und/oder einer Mischung davon, die auf mindestens zum Teil auf den Außenumfang des Stapels (I) aufgebracht wird,
- optional eine zweite Deckschicht aus einem elektrisch isolierenden Material, das durch Abscheidung von Atomschichten mindestens zum Teil auf den Außenumfang des Stapels (I) oder auf die erste Deckschicht aufgebracht wird,
- mindestens eine dichte dritte Deckschicht, vorzugsweise mit einer Wasserdampfdurchlässigkeit (WVTR) von weniger als 10⁻⁵ g/m².d, wobei diese dritte Deckschicht aus einem Keramikmaterial und/oder einem Glas mit niedrigem Schmelzpunkt, vorzugsweise einem Glas mit einem Schmelzpunkt von unter 600 °C, zusammengesetzt ist, die mindestens zum Teil auf den Außenumfang des Stapels (I) oder auf die erste Deckschicht aufgebracht wird,
mit der Maßgabe, dass, wenn die zweite Deckschickt vorhanden ist,
eine Abfolge der zweiten Deckschicht und der dritten Deckschicht z-mal mit z ≥ 1 wiederholt und am Außenumfang mindestens der dritten Deckschicht aufgebracht werden kann,
wobei die letzte Schicht des Verkapselungssystems eine dichte Deckschicht ist, die vorzugsweise eine Wasserdampfdurchlässigkeit (WVTR) von weniger als 10⁻⁵ g/m².d aufweist und aus einem keramischen Material und/oder einem Glas mit einem niedrigen Schmelzpunkt zusammengesetzt ist.

13. Batterie nach Anspruch 12, **dadurch gekennzeichnet, dass** mindestens der Anodenverbindungsbereich (1002), vorzugsweise die erste Längsfläche (F6), die mindestens den Anodenverbindungsbereich (1002) umfasst, von einem anodischen Kontaktorgan (97') bedeckt ist,
und dass mindestens der Kathodenverbindungsbereich (1006), vorzugsweise die zweite Längsfläche (F4), die mindestens den Kathodenverbindungsbereich (1006) umfasst, von einem kathodischen Kontaktorgan (97") bedeckt ist,
mit der Maßgabe, dass das anodische (97') und kathodische (97") Kontaktorgan geeignet ist, den elektrischen Kontakt zwischen dem Stapel (I) und einem äußeren leitenden Element zu gewährleisten.

14. Batterie nach vorhergehendem Anspruch, **dadurch gekennzeichnet, dass** jedes von dem anodischen (97') und kathodischen (97") Kontaktorgan umfasst:
- eine erste elektrische Verbindungsschicht, die auf mindestens dem Anodenverbindungsbereich (1002) und mindestens dem Kathodenverbindungsbereich (1006) angeordnet ist, vorzugsweise auf der ersten Längsfläche (F6), die mindestens den Kathodenverbindungsbereich (1002) umfasst, und auf der zweiten Längsfläche (F4), die mindestens den Kathodenverbindungsbereich (1006) umfasst,
wobei diese erste Schicht ein mit elektrisch leitenden Partikeln beladenes Material, vorzugsweise ein Polymerharz und/oder ein durch ein Sol-Gel-Verfahren hergestelltes Material, das mit elektrisch leitenden Partikeln beladen ist, und noch bevorzugter ein graphitbeladenes Polymerharz umfasst, und
- eine zweite elektrische Verbindungsschicht, die eine Metallfolie umfasst, die auf der ersten Schicht aus mit elektrisch leitfähigen Partikeln beladenem Material angeordnet ist.

15. Batterie nach einem der Ansprüche 12 bis 14, **dadurch gekennzeichnet, dass** mindestens ein Freiraum (113, 143), insbesondere eine Vielzahl der Freiräume, insbesondere alle Freiräume, durch einen Hohlraum (115, 145) verlängert ist, der dazu bestimmt ist, die Imprägnierung mit dem Elektrolyten zu erleichtern, wobei sich der Hohlraum durch den Sekundärkörper (112, 142) bis zu einer zugewandten Längsfläche (F4, F6) erstreckt.

## Claims

1. A method of manufacturing at least one battery (1000), each battery comprising at least one anode entity (110) and at least one cathode entity (140), arranged one above the other in an alternating manner in a front direction (ZZ) of the battery (1000),
in which battery, the anode entity (110) comprises:
an anode current collector substrate (10), at least one anode layer (20), and optionally a layer of electrolyte material (30) or a separator (31) impregnated with an electrolyte,
and in which battery the cathode entity (140) comprises
a cathode current collector substrate (40), at least one cathode layer (50), and optionally a layer of an electrolyte material (30) or of a separator (31) impregnated with an electrolyte,
the battery (1000) having six faces, namely
- two faces called front faces (F1, F2) which are mutually opposite, in particular mutually parallel, generally parallel to each anode entity (110) and to each cathode entity (140),
- two faces called lateral faces (F3, F5) which are mutually opposite, in particular mutually parallel; and
- two faces called longitudinal faces (F4, F6) which are mutually opposite, in particular mutually parallel,
with the understanding that the first longitudinal face (F6) of the battery comprises at least one anode connection zone (1002) and that a second longitudinal face (F4) of the battery comprises at least one cathode connection zone (1006), the anode (1002) and cathode (1006) connection zones being laterally opposite,
- each anode entity (110) and each cathode entity (140) comprising a respective primary body (111, 141) separated from a respective secondary body (112, 142) by a space (113, 143) free of any electrode material and current collector substrate;
- when the battery comprises a plurality of free spaces (113), in the frontal direction (ZZ) of the battery;
- the free spaces formed between each primary body (111) and each secondary body (112) of each anode entity (110) are superimposed;
- the free spaces between each primary body (141) and each secondary body (142) of each cathode entity (140) are superimposed; and
- the free spaces of each anode entity (110) and each cathode entity (140) are not coincident;
the manufacturing method comprising:
a) making a stack (I) comprising, in plan view, x rows with x strictly greater than 1 and y line(s) with y greater than or equal to 1, so as to form a number (x*y) of batteries
this stack being formed by an alternating succession of strata (SA, SC), respectively cathode (SC) and anode (SA) strata, each cathode stratum (SC) being designed to form a number (x*y) of cathode entities (140), while each anode stratum (SA) is designed to form a number (x*y) of anode entities (110),
each stratum (SA, SC) comprising a plurality of primary preforms (111', 141'), respectively anode (111') and cathode (141') primary preforms, each of which is intended to form a respective primary body (111, 141), a plurality of secondary preforms (112', 142'), respectively anode (112') and cathode (142') secondary preforms, each of which is intended to form a respective secondary body (112, 142), the primary preform (111', 141') and the secondary preform (112', 142') being mutually separated by a zone called empty zone (80", 70"), which is intended to form at least one of the free spaces (113, 143), and when the battery comprises several free spaces (113), in the frontal direction (ZZ) of the battery;
- the empty zones (80") of the different anode strata (SA) are superimposed;
- the empty zones (70") of the different cathode strata (SC) are superimposed; and
- the empty zones (80", 70") of each anode stratum (SA) and each cathode stratum (SC) are not coincident,
b) carrying out a heat treatment and/or a mechanical compression of the stack (I) obtained in step a) so as to form a consolidated stack;
c) making a pair of main cuts (DYn, DY'n) between two adjacent empty zones (80", 70"), in plan view, so as to expose the anode connection zone (1002) and the cathode connection zone (1006), and to separate a given battery, formed from a given row (Rₙ), from at least one other adjacent battery, formed from at least one adjacent row (R)ₙ₊₁).

2. The method according to claim 1, **characterized in that** each stratum (SA, SC) is formed by a foil in one piece, the empty zones corresponding in particular to material falls in the foil (70, 80, 70', 80').

3. The method according to claim 1, **characterized in that** each stratum (SA, SC) is formed by a plurality of independent strips (A₁, A₂, Aₙ, C₁, C₂, Cₙ), the empty zones (113', 143') being defined between the edges (LA, LC) facing the adjacent strips.

4. The method according to one of the preceding claims, **characterized in that** empty zones called small empty zones (80, 70) referred to as slots are made, each empty zone, called small empty zone, is intended to form a single free space.

5. The method according to one of claims 1 to 3, **characterized in that** empty zones called large empty zones (80', 70') referred to as notches are made, each large empty zone being intended to form a plurality of free spaces in the same row, in particular all the free spaces in the same row (R)ₙ).

6. The method according to one of the preceding claims, **characterized in that** the empty zones (70, 70', 80', 80') have a rectangular shape, in particular an I shape.

7. The method according to any one of the preceding claims, **characterized in that** one makes after step b), during a step d), a pair of accessory cuts (DXn, DX'n) allowing separating a given line (Lₙ) from at least one adjacent line (Lₙ₋₁, Lₙ₊₁) belonging to the consolidated stack.

8. The method according to any one of the preceding claims, **characterized in that** one carries out during a step e), the impregnation of the consolidated stack obtained in step b) or the impregnation of the line (Lₙ) of batteries (1000) obtained in step d) when step d) is carried out, with a lithium ion carrier phase, such as liquid electrolytes or an ionic liquid containing lithium salts, so that the separator layer (31) is impregnated with an electrolyte;

9. The method according to any one of the preceding claims, **characterized in that** one carries out, before step c) and after step e) if the latter is carried out or else, if step e) is not carried out, after step d) if step d) is carried out or else, if steps e) and d) are not carried out, after step b),
a step f) of encapsulation of the consolidated stack or line (Lₙ) of batteries (1000), preferably, in which one covers, by an encapsulation system (95), the outer periphery of the stack (I) or line (Lₙ) of batteries (1000), preferably the front faces of the stack (F1, F2) or line (Lₙ) of batteries (FF1, FF2), the lateral faces (F3, F5, FF3, FF5) and the longitudinal faces (F4, F6, FF4, FF6) of the stack (I) or the line (Lₙ) of batteries (1000),
the encapsulation system (95) preferably comprising,
- optionally, at least one first cover layer, preferably selected from parylene, F-type parylene, polyimide, epoxy resins, silicone, polyamide, sol-gel silica, organic silica and/or a mixture thereof, deposited on the outer periphery of the stack (I) or the line (Lₙ) of batteries (1000),
- optionally a second cover layer of electrically insulating material deposited by deposition of atomic layers, on the outer periphery of the stack (I) or on the outer periphery of the line (Lₙ) of batteries (1000) or on the first cover layer, and
- at least one waterproof third cover layer, preferably having a water vapor permeance (WVTR) of less than 10⁻⁵ g/m².d, this third cover layer being composed of a ceramic material and/or a low melting point glass, preferably a glass whose melting point is less than 600°C, deposited on the outer periphery of the stack (I) or on the outer periphery of the line (Lₙ) of batteries (1000), or of the first cover layer,
with the understanding that a sequence of at least one second cover layer and at least one third cover layer can be repeated z times with z ≥ 1 and deposited on the outer periphery of at least the third cover layer, and that the last layer of the encapsulation system is a waterproof cover layer, preferably having a water vapor permeance (WVTR) of less than 10⁻⁵ g/m².d and being composed of a ceramic material and/or a low melting point glass.

10. The method according to any one of the preceding claims, **characterized in that** after step c), a step g) is carried out in which one covers at least the anode connection zone (1002), preferably at least the first longitudinal face (F6) comprising at least the anode connection zone (1002), by an anode contact member (97'), capable of ensuring the electrical contact between the stack (I) and an outer conductive element,
and **in that** one covers at least the cathode connection zone (1006), preferably at least the second longitudinal face (F4) comprising at least the cathode connection zone (1006), by a cathode contact member (97"), capable of ensuring electrical contact between the stack (I) and an outer conductive element,
step (i) comprising:
- the deposition on at least the anode connection zone (1002) and on at least the cathode connection zone (1006), preferably, on at least the first longitudinal face (F6) comprising at least the anode connection zone (1002), and on at least the second longitudinal face (F4) comprising at least the cathode connection zone (1006), of a first electrical connection layer of material loaded with electrically conductive particles, the first layer being preferably formed of polymeric resin and/or a material obtained by a sol-gel method loaded with electrically conductive particles;
- optionally, when the first layer is formed of polymeric resin and/or sol-gel material loaded with electrically conductive particles, a drying step followed by a step of polymerization of the polymeric resin and/or the material obtained by a sol-gel method; and
- the deposition, on the first layer, of a second electrical connection layer comprising a metal foil arranged on the first electrical connection layer.
- optionally, the deposition on the second electrical connection layer, of a third electrical connection layer comprising a conductive ink.

11. The method according to any one of the preceding claims, **characterized in that** one forms at least one transverse channel (75, 85) from at least one empty zone (70, 80), in particular from each of a majority of empty zones, in particular from each of all the empty zones, the transverse channel extending at least to an adjacent main cut (DY1, DY2), so as to facilitate impregnation with the electrolyte.

12. A battery (1000) comprising at least one anode entity (110) and at least one cathode entity (140), disposed one above the other in an alternating manner in a frontal direction (ZZ) to the main plane of the battery (1000), forming a stack (I),
wherein the anode entity (110) comprises: an anode current collector substrate (10), at least one anode layer (20), and optionally a layer of an electrolyte material (30) or a separator (31) impregnated with an electrolyte,
and wherein the cathode entity (140) comprises: a cathode current collector substrate (40), at least one cathode layer (50), and optionally a layer of an electrolyte material (30) or a separator (31) impregnated with an electrolyte;
the battery (1000) having six faces, namely
- two faces called front faces (F1, F2) which are mutually opposite, in particular mutually parallel, generally parallel to each anode entity (110), to each cathode entity (140), to the anode current collector substrate(s) (10), to the anode layer(s) (20), to the layer(s) of an electrolyte material (30) or to the layer(s) of separator impregnated with an electrolyte (31), to the cathode layer(s) (50), and to the cathode current collector substrate(s) (40),
- two faces called lateral faces (F3, F5) which are mutually opposite, in particular mutually parallel,
- and two faces called longitudinal faces (F4, F6), which are mutually opposite, in particular mutually parallel,
with the understanding that the first longitudinal face (F6) of the battery comprises at least one anode connection zone (1002) and that a second longitudinal face (F4) of the battery comprises at least one cathode connection zone (1006), the anode (1002) and cathode (1006) connection zones being laterally opposite,
such that:
- each anode entity (110) and each cathode entity (140) comprises a respective primary body (111, 141), separated from a respective secondary body (112, 142), by a space (113, 143) free of any electrode material and current collector substrate,
- when the battery comprises several free spaces (113), in a direction front (ZZ) to the main plane of the battery,
> the free spaces between each primary body (111) and each secondary body (112) of each anode entity (110) are superimposed,
> the free spaces between each primary body (141) and each secondary body (142) of each cathode entity (140) are superimposed, and
> the free spaces of each anode entity (110) and each cathode entity (140) are not coincident.
**characterized in that** the battery comprises an encapsulation system covering at least in part the outer periphery of the stack (I), the encapsulation system (95) covering the stack front faces (F1, F2), the lateral faces (F3, F5) and at least in part the longitudinal faces (F4, F6) such that
only the anode (1002) and cathode (1006) connection zones,
preferably, the first longitudinal face (F6) comprising at least the anode connection zone (1002), and the second longitudinal face (F4) comprising at least the cathode connection zone (1006),
are not covered with the encapsulation system (95), the encapsulation system (95) comprising:
- optionally, a first cover layer, preferably selected from parylene, F-type parylene, polyimide, epoxy resins, silicone, polyamide, sol-gel silica, organic silica and/or a mixture thereof, deposited on at least part of the outer periphery of the stack (I),
- optionally, a second cover layer composed of an electrically insulating material deposited by deposition of atomic layers on at least part of the outer periphery of the stack (I), or on the first cover layer,
- at least one third waterproof cover layer, preferably having a water vapor permeance (WVTR) of less than 10⁻⁵ g/m².d, this third cover layer being composed of a ceramic material and/or a low melting point glass, preferably a glass whose melting point is less than 600°C, deposited on at least part of the outer periphery of the stack (I), or on the first cover layer,
it being understood that when the second cover layer is present,
a succession of the second cover layer and the third cover layer can be repeated z times with z ≥ 1 and deposited on the outer periphery of at least the third cover layer,
the last layer of the encapsulation system being a waterproof cover layer, preferably having a water vapor permeance (WVTR) of less than 10⁻⁵ g/m².d and being composed of a ceramic material and/or a low melting point glass.

13. The battery according to claim 12, **characterized in that** at least the anode connection zone (1002), preferably the first longitudinal face (F6) comprising at least the anode connection zone (1002), is covered by an anode contact member (97'),
and **in that** at least the cathode connection zone (1006), preferably the second longitudinal face (F4) comprising at least the cathode connection zone (1006), is covered by a cathode contact member (97"),
with the understanding that the anode (97') and cathode (97") contact members are capable of ensuring the electrical contact between the stack (I) and an outer conductive element.

14. The battery according to the preceding claim, **characterized in that** each of the anode (97') and cathode (97") contact members comprises:
- a first electrical connection layer, arranged on at least the anode connection zone (1002) and at least the cathode connection zone (1006), preferably on the first longitudinal face (F6) comprising at least the cathode connection zone (1002) and on the second longitudinal face (F4) comprising at least the cathode connection zone (1006),
this first layer comprising a material loaded with electrically conductive particles, preferably a polymeric resin and/or a material obtained by a sol-gel method, loaded with electrically conductive particles and even more preferably a polymeric resin loaded with graphite, and
- a second electrical connection layer comprising a metal foil disposed on the first layer of material loaded with electrically conductive particles.

15. The battery according to any one of claims 12 to 14, **characterized in that** at least one free space (113, 143), in particular a majority of the free spaces, in particular all the free spaces, is extended by a cavity (115, 145) intended to facilitate impregnation with the electrolyte, the cavity extending through the secondary body (112, 142) to an opposite longitudinal face (F4, F6).
